# EUROPÄISCHE PATENTSCHRIFT

(11) **EP 3 496 653 B1**
(45) Veröffentlichungstag und Bekanntmachung des Hinweises auf die Patenterteilung: **24.06.2020**
(21) Anmeldenummer: 17764904.3
(22) Anmeldetag: 11.08.2017
(51) Int. Cl.: A61C 8/00

(54) **DENTALIMPLANTAT MIT BUCHSENKÖRPER UND BAUSATZ FÜR SELBIGES**
DENTAL IMPLANT HAVING A SOCKET BODY, AND KIT FOR SAID DENTAL IMPLANT
IMPLANT DENTAIRE COMPORTANT UN CORPS DE MANCHON ET ENSEMBLE DE PIÈCES ASSOCIÉ

(30) Priorität: 12.08.2016 CH 10402016
(43) Veröffentlichungstag der Anmeldung: 19.06.2019
(73) Patentinhaber: maxon international ag, 6072 Sachseln (CH)
(72) Erfinder: BUURLAGE, Thorsten, 69517 Gorxheimertal (DE); ZIMMERMANN, Dirk, 79350 Sexau (DE); KULLICK, Jochen, 776454 Offenburg (DE)
(74) Vertreter: IPrime Rentsch Kaelin AG
(86) Internationale Anmeldenummer: PCT/IB2017/054918
(87) Internationale Veröffentlichungsnummer: WO 2018/029652

(56) Entgegenhaltungen:
- EP-A1- 2 878 280
- WO-A2-2015/168332
- DE-U1-202008 003 960
- JP-A- 2015 146 927

## Beschreibung

Die vorliegende Erfindung liegt auf dem Gebiet der Dentalimplantate. Sie betrifft ein Dentalimplantat mit einem Buchsenkörper und einen Bausatz für ein solches Dentalimplantat.

### Technologischer Hintergrund

Dentalimplantate können einteilig und mehrteilig ausgestaltet sein. Heutzutage haben sich die mehrteiligen gegenüber den einteiligen Dentalimplantaten durchgesetzt, da mehrteilige Dentalimplantate bessere Anpassungsfähigkeit und Schutz vor unerwünschten Belastungen während des Einheilungsprozesses bieten als einteilige Dentalimplantate.

Eine grosse Anzahl von aus dem Stand der Technik bekannten mehrteiligen Dentalimplantaten ist dreiteilig aufgebaut und umfasst somit einen in einen Kieferknochen einzusetzenden Basiskörper, ein am Basiskörper zu befestigendes Abutment und eine auf das Abutment aufzusetzende Suprakonstruktion. Der auch als Implantatkörper bekannte Basiskörper soll die Zahnwurzel ersetzen und ist meistens zylindrisch oder konisch geformt. In der Regel weist der Basiskörper ein Gewinde auf, über welches der Basiskörper durch Einschrauben im Kieferknochen befestigt werden kann und dadurch eine primäre Festigkeit im Kieferknochen erreicht. Während Basiskörper und Abutment in den Kiefer eingebettet bzw. von der Suprakonstruktion abgedeckt sind, liegt letztere im Mundraum frei und stellt den eigentlichen Zahnaufbau dar. Das auch als Implantataufbau bekannte Abutment dient gewissermassen als Zwischenglied zwischen Basiskörper und Suprakonstruktion und wird in den Basiskörper üblicherweise eingeschraubt und/oder eingeklebt.

Der Basiskörper sollte aus einem möglichst bioinerten Material gefertigt sein, um für den Patienten weitgehend verträglich und komplikationsfrei eingesetzt werden zu können und eine Rückbildung des Zahnfleisches zu unterbinden. Sowohl Material als auch Struktur des Basiskörpers sollen einen hohen Osseointegrationsgrad ermöglichen. Diese Anforderungen an die so genannte Biokompatibilität sowie an eine hohe Periointegration gelten auch für das Abutment und die Suprakonstruktion. Als Material mit vorteilhaften Verarbeitungseigenschaften sowie hoher Biokompatibilität hat sich mehrheitlich Keramik, insbesondere Zirkoniumoxid, durchgesetzt. Als Alternative zur Keramik wird oft Titan eingesetzt, das jedoch keine so gute Biokompatibilität und Periointegration wie Keramik aufweist.

Für den Langzeiterfolg einer Implantation ist eine verlässliche und gegen Knochen sowie Zahnfleisch abgedichtete Verbindung von Abutment und Basiskörper entscheidend. Eine mangelhafte Verbindung zwischen Abutment und Basiskörper kann zur Lockerung des Dentalimplantats und zur Beschädigung des Dentalimplantats führen. Undichte Verbindungen können das Eindringen von Bakterien in das Implantat zulassen, die zu Periimplantitis führen und somit u.a. Kieferknochenschwund herbeiführen können. Weiter stellen im Gebiss auftretende Kräfte für einen Langzeiterfolg von Implantaten hohe Anforderungen an deren Material und Konstruktion. So müssen die Implantate sämtliche im Gebiss auftretenden Kräfte aufnehmen können, ohne zu brechen, einzureissen oder sich zu lockern. Daher ist es sowohl beim Einsetzen als auch über die gesamte Lebensdauer des Dentalimplantates wesentlich, wo und wie genau eine Krafteinleitung in die einzelnen Komponenten des Implantates stattfindet.

Je nach Position des einzusetzenden Dentalimplantats im Kiefer und Knochenangebot an der Position können verschiedene Implantattypen sowie insbesondere verschiedene Längen bzw. Grössen der Dentalimplantate erforderlich sein. Aufgrund der je nach Kiefersituation variierenden geeigneten Grösse des Dentalimplantats kommen in der Regel Serien mit Bestandteilen verschiedener Grössen zum Einsatz, welche für einen hohen Langzeiterfolg wie eingangs genannt eine verlässliche Verbindung zwischen Abutment und Basiskörper bereitstellen sollten. So können die Serien beispielsweise mehrere Basiskörper verschiedener Grösse beinhalten, zum Beispiel mit Längen von 6, 8, 10, 12, 14 oder 16 mm bei unterschiedlichen Durchmessern von beispielsweise 3.3, 4.1 oder 4.8 mm sowie verschiedenartige Abutments, die geradlinig oder abgewinkelt ausgestaltet sind und ebenfalls in verschiedenen Grössen vorliegen können.

Zusammenfassend haben Dentalimplantate hohen Anforderungen an Biokompabilität, Dichtigkeit, Krafteinleitung und Systemflexibilität zu genügen.

Beispielsweise beschreibt die von der Anmelderin eingereichte europäische Patentanmeldung mit der Veröffentlichungsnummer EP 2 735 279 A1, deren Offenbarungsgehalt durch Bezugnahme vollständig hierin mit aufgenommen wird, ein Dentalimplantat mit einem in einem Kieferknochen verankerbaren Basiskörper aus Keramik und einem mittels einer Schraube am Basiskörper befestigbaren Implantataufbau, wobei in einem zusammengesetzten Zustand des Dentalimplantats ein Gewindeabschnitt der Schraube in ein in einem Sackloch des Basiskörpers ausgebildetes Innengewinde eingreift. Die Schraube drückt den Implantataufbau gegen den Basiskörper. Ein formschlüssiger Eingriff zwischen dem Gewindeabschnitt der Schraube und dem Innengewinde des Loches besteht ausschliesslich in einer dem Implantataufbau abgewandten, unteren Hälfte des Basiskörpers, die sich über die Hälfte der Länge des Basiskörpers erstreckt.

Damit soll gemäss der EP 2 735 279 A1_erreicht werden, dass mechanische Spannungen homogen über eine gesamte Länge des Basiskörpers verteilt werden. Das Innengewinde, in das die Spannungen direkt über die Schraube eingeleitet werden, ist relativ weit vom Kontaktbereich zwischen Basiskörper und Implantataufbau entfernt tief im Fuss des Basiskörpers angeordnet. Um eine verlässliche Befestigung des Basiskörpers mit dem Implantataufbau mittels der Schraube zu erreichen, muss die Länge der Schraube mit der Länge des Sacklochs des Basiskörpers sowie eines Teils des Implantataufbaus übereinstimmen. Für verschieden lange Dentalimplantate sind dementsprechend jeweils unterschiedliche Schrauben vorzusehen. Die Bereitstellung unterschiedlicher Schrauben ist nicht nur kostspielig, sondern darüber hinaus auch in der Anwendung mühsam, führt also zu unerwünschten Mehrkosten und Aufwänden.

EP 2878280 A1 zeigt ein Dentalimplantatsystem mit einem Keramikimplantat und mit einem Abutment, welches zudem ein Einsatzelement für das Keramikimplantat enthält. Das Einsatzelement ist entweder aus nicht keramischem Material gefertigt oder ist im Wesentlichen aus Spritzgusskeramik gefertigt. Das Einsatzelement ist passend für eine Ausnehmung in einem proximalen Bereich des Keramikimplantates und in diese Ausnehmung eingesetzt oder einsetzbar. Das Einsatzelement dient der Befestigung des Abutments und ist dafür mit Befestigungsstrukturen ausgerüstet. Das Dentalimplantatsystem zeichnet sich im Wesentlichen dadurch aus, dass das in der Ausnehmung des Keramikimplantates angeordnete Einsatzelement mittels einer gegenüber axialem Zug kraftschlüssigen und/oder formschlüssigen Verbindung mit dem Keramikimplantat verbindbar oder verbunden ist.

WO 2015/168332 A2 zeigt ein einstufiges osseointegratives Vollkeramikimplantat mit Gewinde oder Presspassung, das fein detaillierte Oberflächenmerkmale aufweist, die durch Keramikspritzgiessen und/oder Funkenplasmasintern eines Pulverpresslings oder eines Grünkörpers mit fein pulverisiertem Zirkoniumoxid gebildet werden. In einer anderen Ausführungsform wird ein zweistufiges Gewindeimplantat mit einem Aussenkörper bereitgestellt, der im Wesentlichen vollständig aus Keramik und/oder CNT-verstärktem Keramikverbundmaterial besteht. Das Implantat kann eine oder mehrere reibungsanisotrope knocheneingreifende Oberflächen aufweisen. In einer anderen Ausführungsform wird ein dichtgesintertes Keramikimplantat bereitgestellt, bei dem der poröse entbundene Grünkörper vor dem Sintern Ionen und/oder Partikeln von Silber, Gold, Titan, Zirkoniumoxid, YSZ, α-Tricalciumphosphat, Hydroxyapatit, Kohlenstoff oder Kohlenstoff-Nanoröhren ausgesetzt wird, oder anderen Partikel, die nach dem Sintern auf der Implantatoberfläche zurückbleiben.

DE 202008003960 U1 offenbart ein Zahnimplantat für einen festsitzenden oder herausnehmbaren Zahnersatz, mit einer in eine Bohrung in einem Kieferknochen einsetzbaren Grundkörperhülle aus einem Keramikmaterial, einem nach dem Einwachsen in den Kieferknochen wenigstens teilweise freiliegenden Pfosten aus einem Keramikmaterial für eine Aufnahme des Zahnersatzes, und einer Verbindungsanordnung, welche die Grundkörperhülle und den Pfosten miteinander verbindet und ein metallisches Material aufweist. Die Verbindungsanordnung weist einen Grundkörperkern, welcher in eine Bohrung in der Grundkörperhülle eingesetzt und mit dieser fest verbunden ist, einen Pfostenkern, welcher in eine Bohrung in den Pfosten eingesetzt und mit diesem fest verbunden ist, und ein erstes Befestigungsmittel auf, welches den Grundkörperkern mit dem Pfostenkern lösbar dauerhaft verbindet. Die Verbindungsanordnung weist ferner ein zweites Befestigungsmittel auf, welches den Grundkörperkern mit dem Pfostenkern lösbar vorläufig verbindet.

### Darstellung der Erfindung

Es ist daher eine Aufgabe der Erfindung, Dentalimplantate bereitzustellen, die den allgemeinen Anforderungen für eine erfolgreiche Implantation sowie Verwendung genügen und sich zumindest einfacher an Knochenvariationen und Implantatangebot anpassen lassen als aus dem Stand der Technik bekannte Dentalimplantate.

Diese Aufgabe wird erfindungsgemäss durch ein Dentalimplantat mit den Merkmalen des unabhängigen Anspruchs 1 und einen Bausatz mit den Merkmalen des Anspruchs 15 gelöst. Bevorzugte Ausgestaltungen der Erfindung sind in den abhängigen Ansprüchen und in der vorliegenden Offenbarung angegeben.

Insbesondere wird die Aufgabe durch ein Dentalimplantat gelöst, das einen keramischen Basiskörper, ein keramisches Abutment einen keramischen Zahnaufbau, und/oder einen Verbinder zum Verbinden von Basiskörper, Abutment und/oder Zahnaufbau miteinander, und einen Buchsenkörper umfasst, der zumindest in einem Endmontagezustand des Dentalimplantates wenigstens teilweise im Basiskörper im Abutment und/oder im Zahnaufbau aufgenommen ist bzw. wenigstens abschnittsweise den Verbinder umgreift. Der Verbinder besitzt beispielsweise ein Basisgewinde, das dazu ausgestaltet ist, in ein Innengewinde des Basiskörpers einzugreifen. Somit können Abutment und/oder Zahnaufbau mittels einer durch den Verbinder hergestellten Schraubverbindung am Basiskörper befestigt werden.

Des Weiteren wird die Aufgabe durch einen Bausatz für ein erfindungsgemässes Dentalimplantat gelöst. Der Bausatz umfasst wenigstens einen Buchsenkörper, der dazu ausgestaltet ist, zumindest in einem Endmontagezustand des Dentalimplantates wenigstens teilweise im Basiskörper, im Abutment und/oder im Zahnaufbau aufgenommen zu sein bzw. wenigstens abschnittsweise den Verbinder zu umgreifen.

Die erfindungsgemässe Lösung hat gegenüber dem Stand der Technik den Vorteil, dass den keramischen Komponenten des Dentalimplantats, sprich Basiskörper und Abutment, mit Hilfe des Buchsenkörpers Eigenschaften verliehen werden können, die der Keramik als solchen nicht eigen sind. Somit lässt sich die Gesamtfestigkeit des Dentalimplantates erhöhen und das Material der keramischen Komponenten schonen. Beispielsweise kann der Buchsenkörper dabei helfen, kritische Belastungen, wie Scherkräfte, aufzunehmen oder zu dämpfen. Zudem hilft der Buchsenkörper, vielfältige und verschiedene Dentalimplantatkomponenten aufeinander abzustimmen bzw. miteinander zu kombinieren. Der Buchsenkörper erleichtert somit eine Anpassung eines erfindungsgemässen Dentalimplantates an die jeweiligen Bedingungen sowie Instandhaltungsmassnahmen am Dentalimplantat, wie beispielsweise den Austausch einzelner Komponenten, insbesondere des Abutments und des Zahnaufbaus, wobei es sich bei Abutment und/oder Zahnaufbau alternativ oder zusätzlich um eine temporäre Prothetik, wie beispielsweise den Kopfteil einer Einheilschraube, oder einen Gingivaformer handeln kann.

Die erfindungsgemässe Lösung kann durch die folgenden weiteren, jeweils für sich vorteilhaften Ausführungsformen beliebig ergänzt und weiter verbessert werden, wobei ein Fachmann ohne Weiteres klar und eindeutig erkennen wird, dass Vorrichtungsmerkmale von Komponenten eines erfindungsgemässen Dentalimplantats entsprechende Schritte erfindungsgemässer Verfahren zur Herstellung und zum Einsatz eines erfindungsgemässen Dentalimplantats und seiner Komponenten begründen und umgekehrt.

So ist gemäss einer ersten weiteren Ausführungsform vorgesehen, dass der Buchsenkörper und/oder der Verbinder wenigstens abschnittsweise aus einem Metall, einer Metalllegierung, einem Kunststoff und/oder einem Kohlefaserstoff gefertigt sind bzw. ist. Derartige Materialien, insbesondere Metall und Metalllegierung, beispielsweise aus Titan oder Stahl, besitzen in der Regel eine höhere Zähigkeit als Keramik. Durch die erhöhte Zähigkeit bewirken diese Materialien eine Dämpfung und einen Schutz der keramischen Komponenten.

Durch die mit Hilfe dieser Materialien eingebrachte Zähigkeit und den Schutz der keramischen Komponenten können Wandstärken der Keramik gegenüber dem Stand der Technik vermindert werden, weil die Keramik für sich genommen weniger kritischen Belastungen, wie Scherspannungen, ausgesetzt ist. Somit lassen sich insgesamt schmalere Dentalimplantate als gemäss dem Stand der Technik möglich bereitstellen. Beispielsweise kann eine Wandstärke des Buchsenkörpers 2,5/10 bis 5/10 mm betragen, wobei die Wandstärke der Keramik beispielsweise 4,5/10 bis 5/10 mm betragen kann. Mit anderen Worten kann eine Wandstärke des Buchsenkörpers von zwischen 50 bis 60 % der Wandstärke der Keramik bis in etwa die Wandstärke der Keramik betragen.

Gemäss einer weiteren Ausführungsform ist vorgesehen, dass der Buchsenkörper zumindest im Endmontagezustand wenigstens teilweise in Basiskörper und Abutment eingreift. Durch den gleichzeitigen Eingriff in Basiskörper und Abutment hilft der Buchsenkörper zum einen dabei, das Dentalimplantat zu stabilisieren. Zum anderen hilft der Basiskörper beim Zusammenbau des Dentalimplantates, das Abutment zumindest temporär in einer gewünschten Position auf dem Basiskörper zu halten und somit den Zusammenbau zu erleichtern.

Gemäss einer weiteren Ausführungsform ist vorgesehen, dass der Buchsenkörper zumindest im Endmontagezustand über eine am Basiskörper ausgeformte Kontaktfläche, die dazu ausgestaltet ist, im Endmontagezustand an einer Kontaktfläche des Abutments anzuliegen, hinwegragt. Somit hilft der Buchsenkörper, das Dentalimplantat weiter zu stabilisieren. Die Kontaktflächen von Basiskörper und Abutment werden durch den über die Kontaktfläche des Basiskörpers hinausragenden Teil des Buchsenkörpers sowohl vor als auch nach der Montage gegen ungewünschte Krafteinwirkungen und vor Fehlstellungen geschützt. Das Abutment kann im Verlaufe der Montage des Dentalimplantates auf den Basiskörper gesetzt werden, wobei der Buchsenkörper in das Abutment eingreift, bevor die Kontaktflächen aufeinandertreffen.

Gemäss einer weiteren Ausführungsform ist vorgesehen, dass zumindest im Endmontagezustand das Abutment auf dem Buchsenkörper und/oder dem Basiskörper aufliegt. Zum einen lässt sich somit gewährleisten, dass der Buchsenkörper bis zu einer gewünschten Eindringtiefe in Basiskörper und/oder Abutment aufgenommen ist. Zum anderen hilft eine gleichzeitige Auflage des Abutments an Buchsenkörper und Basiskörper, die Stabilität eines erfindungsgemässen Dentalimplantats weiter zu erhöhen.

Gemäss einer weiteren Ausführungsform ist vorgesehen, dass der Buchsenkörper eine im wesentlichen zylindrische Innenumfangsfläche aufweist. Die zylindrische Innenumfangsfläche hilft dabei, vom Verbinder auf den Buchsenkörper wirkende Kräfte möglichst gleichmässig entlang des Innenumfangs des Buchsenkörpers zu verteilen. Zudem begünstigt die zylindrische Innenumfangsfläche eine relative Rotationsbewegung zwischen Verbinder und Buchsenkörper. Derartige relative Rotationsbewegungen treten insbesondere auf, wenn der Verbinder in den Basiskörper eingeschraubt wird.

Gemäss einer weiteren Ausführungsform ist vorgesehen, dass ein Innendurchmesser des Buchsenkörpers im Wesentlichen einem Aussendurchmesser zumindest eines Schaftabschnittes des Verbinders entspricht. Der Schaftabschnitt des Verbinders kann somit dazu dienen, den Verbinder an seinem Schaftabschnitt möglichst über seinen gesamten Aussenumfang flächig im Buchsenkörper abzustützen. Vorteilhafterweise kann dafür eine Spielpassung mit möglichst geringem Spiel zwischen Schaftabschnitt und Innenumfangsfläche des Buchsenkörpers oder sogar eine Übergangspassung vorgesehen werden.

Gemäss einer weiteren Ausführungsform ist vorgesehen, dass wenigstens ein Formschlusselement an einer Aussenumfangsfläche des Buchsenkörpers ausgeformt ist. Durch das Formschlusselement kann eine Ausrichtung des Buchsenkörpers gegenüber den keramischen Komponenten festgelegt werden. Zudem kann das Formschlusselement dabei helfen, eine Kraft- und/oder Momentenübertragung zwischen dem Buchsenkörper und den keramischen Komponenten zu begünstigen.

Gemäss einer weiteren Ausführungsform ist vorgesehen, dass das wenigstens eine Formschlusselement mit einer Einführschräge versehen ist, die zumindest abschnittsweise in eine Einsetzrichtung weist, in welche der Buchsenkörper in den Basiskörper und/oder das Abutment einsetzbar ausgestaltet ist. Die Einführschräge hilft dabei, den Buchsenkörper ordnungsgemäss in den Basiskörper und/oder das Abutment einzusetzen. Insbesondere hilft die Einführschräge dabei, das Formschlusselement in ein Gegenformschlusselement, wie beispielsweise ein Positivelement oder ein Negativelement einzuführen, das zumindest in einer Projektion entlang der Einsetzrichtung komplementär zum Formschlusselement ausgestaltet dazu dient, Basiskörper, Abutment und/oder Buchsenkörper in einer gewünschten Position, insbesondere in einer gewünschten relativen Drehposition, zueinander festzulegen.

Gemäss einer weiteren Ausführungsform ist vorgesehen, dass wenigstens ein Positivelement des Abutments dazu ausgestaltet ist, formschlüssig mit dem Basiskörper und/oder dem Buchsenkörper zusammenzuwirken. Ein Formschluss zwischen dem Positivelement und dem Basiskörper hilft, eine Relativposition zwischen Abutment und Basiskörper vorzugeben und festzulegen. Ein Formschluss zwischen Abutment und Buchsenkörper hilft, eine Relativposition zwischen Abutment und Buchsenkörper vorzugeben und festzulegen.

Gemäss einer weiteren Ausführungsform ist vorgesehen, dass wenigstens ein Negativelement des Basiskörpers dazu ausgestaltet ist, formschlüssig mit dem Abutment und/oder dem Buchsenkörper zusammenzuwirken. Ähnlich wie beim Positivelement hilft das Negativelement, Relativpositionen zwischen Abutment und Basiskörper vorzugeben und festzulegen. Insbesondere relative Drehpositionen zwischen den keramischen Komponenten einerseits und dem Buchsenkörper andererseits können somit definiert und gesichert werden.

Gemäss einer weiteren Ausführungsform ist vorgesehen, dass der Buchsenkörper mit wenigstens einem Rastelement versehen ist, das dazu ausgestaltet ist, in ein am Verbinder ausgeformtes Gegenrastelement einzugreifen, um Buchsenkörper und Verbinder zumindest temporär unverlierbar miteinander zu verbinden. Beispielsweise kann somit der Buchsenkörper am Verbinder eingeschnappt werden, indem das Element am Gegenrastelement einrastet und folglich verhindert, dass der Buchsenkörper sich ungewollt vom Verbinder löst. Dazu kann das Gegenrastelement beispielsweise als Rastnase ausgestaltet sein, die im eingerasteten Zustand in eine Vertiefung, Nut oder hinter einem am Verbinder ausgeformten Absatz eingreift. Eine Vielzahl von Rastnasen kann kranzförmig angeordnet am Buchsenkörper ausgeformt sein, um ein möglichst gleichmässige Verrastung des Buchsenkörpers am Verbinder zu ermöglichen.

Gemäss einer weiteren Ausführungsform ist vorgesehen, dass das wenigstens eine Rastelement an wenigstens einer Lasche ausgeformt ist, die von einem oberen Randabschnitt eines Mantelabschnittes des Buchsenkörpers hervorragt. Mit anderen Worten ist das Rastelement bzw. ein distales Ende der Lasche in einer axialen Richtung vom Mantelabschnitt und somit von dessen Rand beabstandet. Beispielsweise kann das Rastelement am vom Mantelabschnitt wegweisenden Ende einer derartigen Lasche ausgeformt sein und in einer radialen Richtung des Dentalimplantats in Richtung zu einer Mittelachse des Dentalimplantates hin weisen. Somit kann das an der Lasche angeordnete Rastelement einfach in radialer Richtung ausgelenkt werden, um in ein entsprechendes Gegenrastelement einzurasten, wenn der Verbinder beispielsweise in Einsetzrichtung in den Buchsenkörper eingeführt wird. Des Weiteren hilft die axiale Beanstandung vom Rand der Mantelfläche, Kerbwirkungen zwischen dem Buchsenkörper und einer jeweils im Bereich des Randes der Mantelfläche angeordneten keramischen Komponente des Dentalimplantates zu verhindern.

Gemäss einer weiteren Ausführungsform ist vorgesehen, dass eine minimale Weite des Buchsenkörpers kleiner ist als ein Aussendurchmesser eines Basisgewindes des Verbinders zum Einschrauben des Verbinders in den Basiskörper. Beispielsweise kann der Verbinder zunächst gewindelos hergestellt und dann der Buchsenkörper über den Schaftabschnitt des Verbinders geschoben werden. Anschliessend kann wenigstens das Basisgewinde bzw. können weitere gewünschte Gewinde oder Elemente unter einer Querschnittsflächenveränderung des Verbinders daran ausgeformt werden. Zum Beispiel können die Gewinde mittels Gewindewalzen bzw. Gewinderollen unter Verdrängung des Materials des Verbinders derart am Verbinder ausgeformt werden, dass ein Durchmesser des Gewindes zumindest abschnittsweise grösser ist als ein Durchmesser des Schaftabschnittes. Somit kann der Buchsenkörper unverlierbar am Verbinder gehalten sein. Dies ist insbesondere hilfreich, wenn Buchsenkörper und Verbinder aufeinander abgestimmt zum gemeinsamen Einsatz als Teil eines Bausatzes für ein erfindungsgemässes Dentalimplantat bestimmt sind.

Ferner betrifft die Offenbarung einen Einheitsverbinder zum Verbinden eines Abutments eines Dentalimplantats mit einem Basiskörper des Dentalimplantat, umfassend einen entlang einer Einsetzrichtung in den Basiskörper einsetzbaren und darin fixierbaren Basisabschnitt und einen Abutmenthalteabschnitt zum Halten des Abutments am Basiskörper, wobei der Abutmenthalteabschnitt wenigstens zwei entlang der Einsetzrichtung voneinander beabstandete Haltepositionen für das Abutment bereitstellt.

Die Offenbarung betrifft weiter ein Einheitsverbindungssystem für Dentalimplantate umfassend mindestens einen erfindungsgemässen Einheitsverbinder. Mit Hilfe des Einheitsverbinders kann das Einheitsverbinder System für eine Vielzahl verschieden grosser und verschiedenartiger Dentalimplantate verwendet werden. Neben wenigstens einem Einheitsverbinder kann das Einheitsverbindungssystem noch weitere Elemente, wie Halteelemente, Zusatzhalteelemente sowie mit diesen und/oder dem Einheitsverbinder zusammenwirkende Werk und/oder Messzeuge beinhalten.

In der Regel weisen sowohl der Basiskörper als auch das Abutment Bohrungen auf, welche den Einheitsverbinder aufnehmen können, wobei im zusammengesetzten Zustand des Dentalimplantats ein unterer Bereich des Einheitsverbinders sich im Basiskörper befindet und ein oberer Bereich des Einheitsverbinders sich im Abutment befindet. Der Einheitsverbinder kann je nach Länge des Basiskörpers als auch des Abutments oben aus dem Abutment herausragen. Bevorzugt ist der erste Endbereich beim Einsetzen des Einheitsverbinders in den Basiskörper mit dem Basiskörper verbindbar, vorzugsweise fest verankerbar. Optional kann der Einheitsverbinder in den Basiskörper eingeklebt oder alternativ bajonettverschlussartig verbunden werden.

Der Einheitsverbinder bietet den Vorteil, dass er dank der veränderbaren Länge für Dentalimplantate von verschiedener Grösse verwendet werden kann. Bei herkömmlichen Lösungen mit konventionellen Schrauben hingegen müssen die Grössen bzw. Längen der Bestandteile mit der Schraube genau abgestimmt sein, um eine verlässliche Verbindung von Basiskörper und Abutment zu gewährleisten. Indem der Einheitsverbinder wenigstens zwei Haltepositionen bereitstellt, ermöglicht er es sowohl bei verschieden grossen Basiskörper als auch verschieden grossen Abutments eingesetzt zu werden. Somit kann beispielsweise bei gesamten Serien für Dentalimplantate eine formschlüssig abgedichtete Verbindung des Basiskörpers mit dem Abutment durch den gleichen Einheitsverbinder erzielt werden, der vorteilhafterweise möglichst tief im Basiskörper verankert sein kann. Dies hilft zum einen, einen stabilen Aufbau des Dentalimplantates zu gewährleisten. Zum anderen lassen sich durch eine gegenüber dem Stand der Technik erhöhte Variabilität Produktionskosten für Dentalimplantate senken und deren Anwendung vereinfachen. Durch die Wirkverbindung des zweiten Endbereichs des Einheitsverbinders mit dem Abutment kann der Einheitsverbinder den Basiskörper mit dem Abutment, vorzugsweise kraft und formschlüssig abdichtend, verbinden. Die Wirkverbindung kann u.a. formschlüssig, kraftschlüssig und/oder stoffschlüssig, u.a. auch indirekt über ein Halte- bzw. Verbindungsmittel, wie z.B. in Ausgestaltung einer Hülse, erfolgen. Formschlüssig ist im dem Fachmann bekannten Rahmen der Fertigung der Bestandteile des Dentalimplantats zu verstehen. Abdichtend ist im Zusammenhang mit der Verbindung zwischen dem Abutment und dem Basiskörper so zu verstehen, dass die Kontaktflächen zwischen dem Basiskörper und dem Abutment so dicht sind, dass z.B. keine Bakterien zwischen Basiskörper und Abutment eindringen können, was dabei hilft Periimplantitis zu vermeiden.

Ein Einheitsverbinder lässt sich insbesondere durch die Abdichtung bei mehrteiligen Dentalimplantaten aus Keramik besonders vorteilhaft einsetzen. Bei derartigen Dentalimplantaten ist in der Regel ein Innenraum bzw. eine Kavität zwischen Basiskörper und Abutment gebildet. Bei ordnungsgemässer Montage des Abutments am Basiskörper ist der Innenraum hermetisch gegenüber Kieferknochen und Zahnfleisch abgedichtet. Der Einheitsverbinder kann daher von Kieferknochen und Zahnfleisch isoliert im Innenraum aufgenommen sein. Somit kann der Einheitsverbinder auch aus anderen Materialien als Keramik, beispielsweise rostfreier Stahl und/oder Titan o.ä., gefertigt sein, ohne Abstriche bei der Biokompatibilität des Dentalimplantates machen zu müssen, weil diese durch die keramische Beschaffenheit der den Einheitsverbinder umhüllenden Komponenten des Implantates gewährleistet ist.

Die erfindungsgemässe Lösung lässt sich mit den folgenden weiteren, jeweils für sich vorteilhaften erfindungsgemässen Ausführungsformen beliebig kombinieren und weiter verbessern.

Gemäss einer ersten weiteren Ausführungsform sind die Haltepositionen stufenlos variabel wählbar. Eine stufenlos variable Wählbarkeit der Haltepositionen erlaubt es, eine Vielzahl verschiedenartiger Basiskörper und Abutments mit dem gleichen Typ Einheitsverbinder miteinander zu verbinden. Auch hilft die stufenlos variable Wählbarkeit der Haltepositionen dabei, etwaige Fertigungstoleranzen sowie Abweichungen oder Ungleichmässigkeiten beim implantieren bzw. Aufbauen des Implantats auszugleichen.

Gemäss einer weiteren Ausführungsform ist vorgesehen, dass der Basisabschnitt ein erstes Aussengewinde aufweist, welches mit einem Innengewinde des Basiskörpers in Eingriff bringbar ausgestaltet ist und die wenigstens zwei Haltepositionen bereitstellt. Durch das Aussengewinde kann der Einheitsverbinder auf einfache Weise in den Basiskörper eingeschraubt und somit form- sowie kraftschlüssig damit verbunden werden. Entlang des Aussengewindes können die Haltepositionen stufenlos variabel wählbar bereitgestellt sein.

Gemäss einer weiteren Ausführungsform eines erfindungsgemässen Einheitsverbinders ist vorgesehen, dass eine parallel zur Einsetzrichtung gemessene Länge des ersten Aussengewindes im Wesentlichen mit einer parallel zur Einsetzrichtung gemessene Länge des Innengewindes übereinstimmt oder zumindest lediglich geringfügig die Länge des Innengewindes unterschreitet. Somit können Innengewinde und Aussengewinde sich im Wesentlichen vollständig überdecken. Zum einen hilft dies, durch die Dimensionierung der Gewinde selber einen unteren Anschlag für den Einheitsverbinder bereitzustellen und somit seinen Einsetzweg in Einsetzrichtung zu begrenzen. Zum anderen ist die form- und kraftschlüssige Verbindung zwischen Einheitsverbinder und Basiskörper präzise auf den Bereich besagter Gewinde beschränkt und darin konzentriert. Unnötige Gewindegänge und damit verbundene Materialschwächungen sind vermieden.

Gemäss einer weiteren Ausführungsform eines erfindungsgemässen Einheitsverbinders ist vorgesehen, dass der Einheitsverbinder zwischen dem Basisabschnitt und dem Abutmenthalteabschnitt einen zylinderförmigen Schaftabschnitt aufweist. Somit kann der Einheitsverbinder als eine Art Stehbolzen mit je einem Gewinde an jedem Ende hergestellt werden. Der Schaftabschnitt begünstigt eine möglichst spielfreie Aufnahme des Einheitsverbinders sowohl im Basiskörper als auch im Abutment. Etwaige Querkräfte oder Momente können über möglichst mit geringem Spiel bzw. spielfrei dimensionierte Anlageflächen zwischen Schaftabschnitt und Basiskörper einerseits sowie zwischen Schaftabschnitt und Abutment andererseits übertragen werden, was dabei hilft, die Robustheit und Langlebigkeit des gesamten Dentalimplantats zu verbessern.

Gemäss einer weiteren Ausführungsform weist der Schaftabschnitt wenigstens teilweise einen grösseren Durchmesser als der Basisabschnitt auf. Im Bereich der Durchmesseränderung kann ein Anschlag bzw. eine Abstufung gebildet sein, welcher hilft, einen Einsetzweg des Einheitsverbinders in Einsetzrichtung zu begrenzen. Darüber hinaus ermöglicht diese Ausführungsform, den Schaftabschnitt derart stabil auszugestalten, dass in Querrichtung bzw. radial zur Mittelachse des Schaftabschnittes bzw. Einheitsverbinders wirkende Kräfte sicher aufgenommen und abgetragen werden können. Im Gegensatz dazu können Gewinde im Basisabschnitt und im Abutmenthalteabschnitt zur Aufnahme von parallel zur Einsetzrichtung wirkenden Zugkräften ausgestaltet sein, was dabei hilft, die Abmasse der einzelnen Bestandteile des Dentalimplantates zu optimieren. Des Weiteren bietet diese Ausführungsform den Vorteil, dass ein Kontakt zwischen Basisabschnitt und der Innenwand der Bohrung des Basiskörpers bei der Einführung des Einheitsverbinders in die Bohrung des Basiskörpers minimiert werden kann. Bei einem Gewinde im Basisabschnitt kann zum Beispiel ein Kontakt zwischen dem Gewinde und der Innenwand der Bohrung des Basiskörpers bei der Einführung des Einheitsverbinders zu Beschädigungen führen, was insbesondere für Basiskörper aus Keramik kritisch sein kann. Durch eine Abstufung kann somit vorteilhafterweise eine Führung des Einheitsverbinders durch den Schaft sichergestellt und eine nachteilhafte Beschädigung des Basiskörpers durch Kontakt der Innenwand mit dem Basisabschnitt minimiert werden. Vorzugsweise weist die Bohrung des Basiskörpers im unteren Bereich anschliessend eine dem ersten Endbereich des Einheitsverbinders entsprechende verengte Bohrung auf, in welche der Basisabschnitt des Einheitsverbinders eingreifen bzw. möglichst bündig damit abschliessend eingesetzt werden kann.

Gemäss einer weiteren Ausführungsform ist ein mit den Abutmenthalteabschnitt umgreifendes Halteelement vorgesehen, das dazu ausgestaltet ist, zum Halten des Abutments mit dem Abutmenthalteabschnitt zusammenzuwirken. Das Halteelement kann in den wenigstens zwei Haltepositionen am Einheitsverbinder fixierbar bzw. arretierbar ausgestaltet sein oder zumindest derart mit dem Einheitsverbinder zusammenwirken, dass es im Wesentlichen parallel zur Einsetzrichtung wirkende Kräfte vom Einheitsverbinder aufnehmen und an diesen übertragen kann. Verschiedene Halteelemente können mit jeweils dem gleichen Einheitsverbinder kombiniert werden, um diesen mit verschiedenartigen Basiskörpern und/oder Abutments zusammen verwenden zu können.

Gemäss einer weiteren Ausführungsform des Einheitsverbinders ist vorgesehen, dass das Halteelement wenigstens eine zumindest teilweise entgegen der Einsetzrichtung weisende Haltefläche zum Halten des Abutments aufweist. Die Haltefläche kann den jeweiligen Anforderungen gemäss ausgestaltet sein, um im Wesentlichen parallel zur Einsetzrichtung wirkende Kräfte zu übertragen. Die Ausgestaltung der Haltefläche kann für den jeweiligen Basiskörper bzw. das jeweilige Abutment optimiert sein.

Gemäss einer weiteren Ausführungsform des Einheitsverbinders ist vorgesehen, dass der Abutmenthalteabschnitt mit wenigstens einem Haltegewinde zum form- und kraftschlüssigen Zusammenwirken mit dem Halteelement versehen ist. Somit kann das Halteelement einfach am Haltegewinde auf den Einheitsverbinder geschraubt werden. Das Halteelement ist mit einem entsprechenden Gewinde ausgestattet, dass komplementär zum Haltegewinde ausgestaltet ist. Dies ermöglicht es, eine Vielzahl weitestgehend frei variabel wähl und justierbare Haltepositionen bereitzustellen. Sobald der Einheitsverbinder ordnungsgemäss in den Basiskörper eingesetzt ist, kann das Abutment mit Hilfe des Halteelements einfach in gewünschter Position am Basiskörper fixiert werden, indem das Halteelement mit einem angemessenen Drehmoment auf das Haltegewinde des Einheitsverbinders geschraubt wird. Vorteilhafterweise können somit auch insbesondere im Bereich des Basisabschnitts bzw. der Verbindung zwischen Basiskörper und Einheitsverbinder auftretende Fertigungs- und Montagetoleranzen ausgeglichen und eine möglichst bündige, stabile und abgedichtete Verbindung zwischen Abutment und Basiskörper hergestellt werden.

Gemäss einer weiteren Ausführungsform ist das Halteelement hülsenartig mit einer im Wesentlichen zylinderförmigen Aussenkontur ausgestaltet. Über eine derartige Hülse ist der Einheitsverbinder mit dem Abutment zur formschlüssig abgedichteten Verbindung des Abutments und des Basiskörpers auf einfache und effektive Art und Weise verbindbar. In einer vorteilhaften Ausgestaltung wird die Hülse in den Abutmenthalteabschnitt eingreifend über diesen geschoben und drückt beim Eingreifen das Abutment formschlüssig abdichtend gegen den Basiskörper. Unter Schieben versteht der Fachmann in diesem Zusammenhang nicht nur eine transversale Geleitsbewegung, sondern im Allgemeinen eine Positionierung, wobei ein Bestandteil in oder an einem anderen aufgenommen wird. Ein Verschieben kann daher auch ein Verschrauben umfassen bzw. eine Kombination zwischen transversale Geleitbewegung und Verschraubung darstellen, wenn die Hülse zum Beispiel zuerst auf den Abutmenthalteabschnitt gesteckt und nach dem Eingreifen in ein daran vorgesehenes Haltegewinde geschraubt wird.

In der Regel ist die Hülse in einen Hülsenaufnahmebereich der Bohrung des Abutments einführbar und bündig mit diesem abschliessend ausgestaltet. In einer Ausgestaltung beträgt eine im Wesentlichen parallel zur Einsteckrichtung gemessene Länge der Hülse mindestens 50%, vorzugsweise mindestens 75%, besonders vorzugsweise mindestens 85%, der ebenfalls im Wesentlichen parallel zur Einsteckrichtung gemessenen Länge eines Hülsenaufnahmebereichs der Durchgangsbohrung des Abutments. In einer alternativen Ausführung kann die Hülse auch länger als der Hülsenaufnahmebereich der Durchgangsbohrung des Abutments ausgeführt sein. Die Hülse steht dann über das Abutment raus, was eine zusätzliche Stabilität erzeugt.

Gemäss einer weiteren Ausführungsform ist wenigstens ein den Abutmenthalteabschnitt umgreifendes Zusatzhalteelement vorgesehen, das dazu ausgestaltet ist, zum Halten des Abutments mit dem Abutmenthalteabschnitt zusammenzuwirken. Das Zusatzhalteelement kann dazu dienen, das Halteelemente bzw. dessen Wirkbereich zu verlängern bzw. es zu stabilisieren oder kontern. Insbesondere kann das Zusatzhalteelement zusätzlich zum Halteelemente Stützfunktionen ausüben. Somit hilft das Zusatzhalteelement dabei, den Einheitsverbinder noch flexibler in Verbindung mit verschiedenen Basiskörpern und/oder Abutments einzusetzen.

Ein Zusatzhalteelement bietet für Ausgestaltungen mit Abutments, welche eine Bohrung mit einem Halteelement bzw. Hülsenaufnahmebereich aufweisen, welcher wesentlich länger (z.B. mehr als doppelt so lang) als das Halteelement ist, den Vorteil, dass nach Einsetzen des Halteelementes der verbliebene Zwischenraum zwischen dem Abutmenthalteabschnitt und der Innenwand des Halteelements bzw. Hülsenaufnahmebereichs der Bohrung des Abutments durch das Zusatzhalteelement besetzt werden kann. Dadurch kann die Stabilität des Dentalimplantats erhöht werden, da die Abstützfläche zwischen Abutment und Einheitsverbinder vergrössert wird.

Gemäss einer weiteren Ausführungsform ist vorgesehen, dass das Halteelement und/oder das Zusatzhalteelement als eine Art Rundmutter mit einem inneren Gewinde versehen sind bzw. ist. Das innere Gewinde ist jeweils komplementär zum am Abutmenthalteabschnitt ausgeformten Gewinde ausgestaltet. Somit lassen sich Halteelement und Zusatzhalteelement einfach auf den Abutmenthalteabschnitt aufschrauben.

Gemäss einer weiteren Ausführungsform ist vorgesehen, dass das Halteelement und/oder das Zusatzhalteelement ein Eingriffsmittel aufweisen bzw. aufweist, an dem ein Werkzeug zum betätigen des Halteelements und/oder des Zusatzhalteelements abstützbar ist. Insbesondere kann das Eingriffsmittel komplementär zu einem Gegeneingriffsmittel eines Spezialwerkzeugs ausgestaltet sein, mit welchem Halteelement bzw. Zusatzhalteelement betätigbar sind. Bei auf den Abutmenthalteabschnitt aufschraubbarem Halteelement bzw. Zusatzhalteelement ist das Eingriffsmittel so ausgestaltet, dass ein Drehmoment zum Aufschrauben von Halteelement bzw. Zusatzhalteelement auf diese übertragbar ist. Eingriffsmittel können in einer Ausgestaltung an einem Ende des Halteelementes bzw. Zusatzhalteelements, vorzugsweise axialsymmetrisch daran angeordnete und ausgeformte Nuten sein.

Gemäss einer zusätzlichen Ausführungsform ist vorgesehen, dass eine im Wesentlichen parallel zur Einsetzrichtung gemessene Länge des Einheitsverbinders veränderbar ist. Dies bietet den Vorteil, dass der Einheitsverbinder bei verschieden grossen Dentalimplantaten mit einer für den Einheitsverbinder zu grossen oder zu kleinen Länge gekürzt bzw. verlängert werden kann.

Gemäss einer weiteren Ausführungsform ist vorgesehen, dass der Einheitsverbinder in Abhängigkeit der Grösse des Dentalimplantats an vorgegebenen Ablängmarkierungen ablängbar ausgestaltet ist. Die Ablängmarkierungen erlauben es, den Einheitsverbinder vor, während oder nach seinem Einsetzen auf die gewünschte Länge präzise abzulängen. Insbesondere bietet dies den Vorteil, dass der Einheitsverbinder für kleine Dentalimplantate, für welche der Basiskörper kurz ist, angepasst werden kann, indem die Länge des Einheitsverbinders gekürzt wird. Bevorzugt ist der Basisabschnitt und/oder der Abutmenthalteabschnitt von einer ausreichenden Länge, so dass nach einer Kürzung des Einheitsverbinders der Basisabschnitt und/oder der Abutmenthalteabschnitt noch eine ausreichende Länge aufweisen, um eine Verbindung mit dem Basiskörper und/oder eine Wirkverbindung mit dem Abutment sicherzustellen.

Gemäss einer weiteren Ausführungsform ist vorgesehen, dass die Ablängmarkierungen als Sollbruchstellen ausgeformt sind. Die Sollbruchstellen vereinfachen ein präzises Ablängen des Einheitsverbinders und verhindern unerwünschte Beschädigungen beim Ablängen. In Ausgestaltungen, bei welchen der Basisabschnitt und/oder der Abutmenthalteabschnitt ein Gewinde aufweisen, erstreckt sich das Gewinde vorteilhafterweise über eine derart ausreichende Länge entlang der Einsetzrichtung, dass auch nach einer Kürzung ein ausreichendes Gewindestück verbleibt, um eine Verbindung mit dem Basiskörper und/oder mit dem Abutment sicherzustellen. In einer besonders vorteilhaften Ausgestaltung ist der Abutmenthalteabschnitt länger als der Basisabschnitt. Wenn dann der Einheitsverbinder im Bereich des Abutmenthalteabschnitts abgelängt wird, bleiben Basisabschnitt und Basiskörper davon unberührt.

Gemäss einer weiteren Ausführungsform ist vorgesehen, dass der Abutmenthalteabschnitt und/oder der Basisabschnitt mit einer Verbinderverlängerung, vorzugsweise in Form einer Bolzenverlängerung oder Schraubenverlängerung, in Eingriff bringbar ausgestaltet ist. Vorzugsweise kann zum Verlängern eine Bolzenverlängerung oder Schraubenverlängerung vorgesehen sein, die einen Aussendurchmesser aufweist, welcher mit dem Aussendurchmesser des Einheitsverbinders übereinstimmt, so dass sich bezüglich der Führung des Abutments und/oder eines Halteelementes und der radialen Positionierung des Einheitsverbinders in der Durchgangsbohrung des Abutments keine Änderungen ergeben. Bei Ausgestaltungen mit einem Aussengewinde im Basisabschnitt und einem Haltegewinde im Abutmenthalteabschnitt bietet die Verbinderverlängerung den Vorteil, dass der Einheitsverbinder auf flexible Weise je nach Erfordernis an beiden Enden verlängert werden kann. Bei Ausgestaltungen mit einem zylinderförmigen Schaftabschnitt ist der Aussendurchmesser der Rundmutter vorteilhafterweise gleich dem Aussendurchmesser des Schaftabschnittes, so dass ein stufenloser Übergang zwischen Schaftabschnitt und der Verbinderverlängerung ermöglicht wird. Ausserdem kann der Einheitsverbinder bei grossen Dentalimplantaten mit einer ansonsten für den Einheitsverbinder zu grossen Länge angepasst bzw. verlängert werden kann. Vorzugsweise weist die Bolzenverlängerung oder Schraubenverlängerung einen Aussendurchmesser auf, welche mit dem Aussendurchmesser des Einheitsverbinders übereinstimmt, so dass sich bezüglich der Führung des Einheitsverbinders und der radialen Positionierung in der Bohrung des Basiskörpers keine Änderungen ergeben.

Ein Einheitsverbinder samt etwaigen Halte und/oder Verlängerungselementen kann gemäss einer weiteren Ausführungsform wendbar ausgestaltet sein, sodass die Funktion von Basis und Abutmenthalteabschnitt den jeweiligen Anforderungen gemäss beliebig miteinander getauscht werden kann. Die Dimensionen von Basis und Abutmenthalteabschnitt können so auf verschiedenartigen Basiskörper bzw. Abutments abgestimmt sein, dass beispielsweise für gewisse Grössen und Typen der Basiskörper der Basisabschnitt und bei anderen Grössen und Typen der Abutmenthalteabschnitt darin eingesetzt und somit zum Basishalteabschnitt wird, während dieser dann die Funktion des Abutmenthalteabschnitt erfüllt. Durch eine derartige Wendefunktion lässt sich die Variabilität des Einheitsverbinders erhöhen.

Beim offenbarten Einheitsverbindungssystem kann die erfindungsgemässe Lösung dadurch weiter verbessert werden, dass das Einheitsverbindungssystem des Weiteren wenigstens einen in einen Kieferknochen einsetzbaren Basiskörper und/oder wenigstens ein Abutmenthalteabschnitt umfasst, die dazu ausgestaltet sind, mit dem Einheitsverbinder zusammenzuwirken. Einen in einen Kieferknochen einsetzbaren Basiskörper, ein mit dem Basiskörper formschlüssig verbindbares Abutment, und einen Einheitsverbinder gemäss der vorliegenden Offenbarung erlauben es, besonders kostengünstig flexibel einsetzbare Serien von Dentalimplantaten bereitzustellen, die modulartig miteinander kombinierbare Bestandteile umfassen.

Gemäss einer weiteren Ausführungsform eines Einheitsverbindungssystems ist vorgesehen, dass der Basiskörper eine Bohrung zur Aufnahme des Einheitsverbinders aufweist bzw. dass das Abutment eine im Wesentlichen parallel zur Einsetzrichtung verlaufende Durchgangsbohrung aufweist, in der wenigstens eine Schulter angeordnet ist, die einen entgegen der Einsetzrichtung weisenden Anschlag für den Einheitsverbinder ausbildet. Das Abutment weist also in der Regel eine durchgehende Bohrung und auf der Innenseite der Bohrung eine Schulter, beispielsweise in Form einer Abstufung, auf, über welche das Abutment an den Basiskörper abdichtend anpressbar ist.

Gemäss einer weiteren Ausführungsform ist vorgesehen, dass die Bohrung des Basiskörpers in einer Abutment abgewandten Hälfte des Basiskörpers ein mit dem Basisabschnitt in Eingriff bringbares Innengewinde aufweist. Somit kann der Einheitsverbinder einfach in den Basiskörper eingeschraubt werden. Die Anordnung des Innengewindes in der vom Abutment abgewandten Hälfte des Basiskörpers ermöglicht es bei gleichzeitiger seitlicher Abstützung des Einheitsverbinders in oberhalb des Innengewindes liegenden Abschnitten des Basiskörpers, im Wesentlichen lediglich parallel zur Einsetzrichtung verlaufende Zug oder Druckkräfte am Innengewinde vorliegen zu haben, wodurch die Gefahr von Beschädigungen, beispielsweise Brüchen oder Rissen, im Bereich des Innengewindes vermieden werden, die insbesondere dann auftreten können, wenn Gewindegänge und ungünstige Krafteinleitungen zu unerwünschten Kerbwirkungen führen.

Mit anderen Worten bietet eine Anordnung des Innengewindes in der dem Abutment abgewandten Hälfte des Basiskörpers den Vorteil, dass die auftretenden Kräfte am Innengewinde in den unteren Bereich des Basiskörpers geleitet und daher vom Kontaktbereich zum Abutment entfernt gehalten werden können. Dies führt vorteilhafterweise dazu, dass Zug und Scherspannungen im Kontaktbereich zwischen Abutment und Basiskörper, insbesondere an Auflageflächen, im Wesentlichen vermieden werden können. Vorteilhafterweise verbleiben im Kontaktbereich hauptsächlich Druckspannungen, was insbesondere für Keramikbestandteile vorteilhaft ist, da das Keramikmaterial zwar druckkraftstabil, aber eher zugkraftinstabil ist. Diese Anordnung bietet daher den Vorteil, dass die Stabilität und somit der Langzeiterfolg des Dentalimplantats erhöht werden kann.

Gemäss einer weiteren Ausführungsform ist vorgesehen, dass ein grösster Aussendurchmesser des Einheitsverbinders zumindest in einer unteren Hälfte des Einheitsverbinders derart auf einen kleinsten Innendurchmesser der Bohrung des Basiskörpers abgestimmt ist, dass der Einheitsverbinder beim Einsetzen in die Bohrung im Wesentlichen spielfrei im Basiskörper geführt ist. Die spielfreie Führung hilft dabei, den Einbau des Einheitsverbinders zu vereinfachen und die Langzeitstabilität des gesamten Implantats zu erhöhen.

Gemäss einer weiteren Ausführungsform ist vorgesehen, dass ein kleinster Innendurchmesser der Durchgangsbohrung des Abutments derart auf einen grössten Aussendurchmesser des Halteelementes und/oder des Zusatzhalteelements abgestimmt ist, dass das Halteelement und/oder das Zusatzhalteelement im Wesentlichen spielfrei im Abutment geführt sind bzw. ist. Bevorzugt weist die Bohrung des Abutments einen dem Basiskörper zugewandten unteren Bereich mit einem kleineren Durchmesser als dem Durchmesser eines dem Basiskörper abgewandten oberen Bereichs der Bohrung des Abutments auf, welcher einen Aufnahmebereich für das Halteelement und/oder das Zusatzhalteelement bildet, wobei die beiden Bereiche über die Abstufung so aneinander angrenzen, dass das Abutment durch Anschlag der Hülse an der Abstufung in axialer Richtung des Dentalimplantats in den Basiskörper formschlüssig abdichtend anpressbar ist. In Ausgestaltungen des Abutments mit einer Abstufung beträgt die Länge der Hülse vorzugsweise mindestens 50%, besonders vorzugsweise mindestens 75%, ganz besonders vorzugsweise mindestens 85%, der Länge des oberen Bereichs, bzw. des Hülsenaufnahmebereichs, der Bohrung des Abutments.

Gemäss einer weiteren Ausführungsform ist vorgesehen, dass die Bohrung im Basiskörper als eine durchgehende Bohrung ausgestaltet ist und am unteren Ende eine Kappe aufweist, welche die Bohrung wenigstens teilweise abdeckt und welche mit einem Teil des Basisabschnitts des Einheitsverbinders in Eingriff bringbar und beim Einsetzen des Einheitsverbinders vom Basiskörper derart abtrennbar ausgestaltet ist, dass in einem vollständig in den Kieferknochen eingesetzten Zustand von Basiskörper und Einheitsverbinder das untere Ende des Einheitsverbinders die Kappe in den Kieferknochen presst. Mit der vom Basiskörper trennbaren Kappe kann vorteilhafterweise die Flexibilität des Dentalimplantats weiter erhöht werden. Bei einem zu langen Einheitsverbinder in Bezug auf den Basiskörper kann der Einheitsverbinder so weit in den Basiskörper eingeführt, bzw. eingeschraubt (in Ausgestaltungen mit einem ersten Gewinde im ersten Endbereich) werden, bis der Einheitsverbinder an der Kappe anschlägt, die Kappe schliesslich vom Basiskörper trennt und weiter in den Kieferknochen presst. Die Stabilität der Verankerung des Dentalimplantats kann mit der weiter in den Kieferknochen gepressten Kappe mit Vorteil erhöht werden. Mit Vorteil kann die durch die getrennte Kappe entstehende zusätzliche Fläche den Osseointegrationsgrad erhöhen helfen.

Alternativ ist die Bohrung des Basiskörpers als Sackloch ausgebildet. Bevorzugt beträgt die Länge des Sackloches mindestens 80%, besonders bevorzugt mindestens 90% der Gesamtlänge des Basiskörpers. Dies bietet den Vorteil, dass die gesamte Länge des Basiskörpers zur Aufnahme von Kräften, z.B. Schraubkräften, bei der Verbindung des Einheitsverbinders mit dem Basiskörper dienen kann.

Gemäss einer weiteren Ausführungsform ist vorgesehen, dass zwischen einem grössten Aussendurchmesser des Halteelementes und/oder des Zusatzhalteelementes und dem kleinsten Innendurchmesser der Durchgangsbohrung des Abutments ein Spalt gebildet ist, dessen Breite vorzugsweise zwischen 0.001 mm und 0.1 mm beträgt. Der Spalt dient dazu, ein ausreichendes Spiel in radialer Richtung zwischen der Hülse und dem Abutment bereitzustellen, so dass eine Überbestimmung vermieden werden kann. Das Spiel ist mit Vorteil aber ausreichend klein, dass die Hülse die Stabilität dadurch erhöhen kann, dass sich das Abutment bei auftretenden Querkräften an der Hülse abstützen kann.

In einer Ausgestaltung ist der Basiskörper aus Keramik, vorzugsweise Zirkoniumoxid oder auf Zirkoniumoxid-Basis, gefertigt. In einer Ausgestaltung ist das Abutment aus Keramik, vorzugsweise aus Zirkoniumoxid oder auf Zirkoniumoxid-Basis, gefertigt. Bevorzugt werden der Basiskörper und/oder das Abutment in Ausgestaltungen aus Keramik durch Pulverspritzgiessverfahren hergestellt. Dies bietet den Vorteil einer kostengünstigen Herstellung. Das Keramikmaterial bietet den Vorteil einer hohen Biokompatibilität sowie eines hohen Osseointegrationsgrads. Weiter bietet das Keramikmaterial im Vergleich zu Titan einen kosmetischen Vorteil bei Zahnfleischrückgang, was bei Dentalimplantaten oft eintritt.

In Ausgestaltungen des Basiskörpers aus Keramik und mit einem Innengewinde ist das Innengewinde vorzugsweise als Rundgewinde ausgebildet. In einer vorteilhaften Variante weist in diesen Ausgestaltungen der erste Endbereich des Einheitsverbinders ein Trapezgewinde auf. Dies bietet den Vorteil, dass die Gewindegänge des Innengewindes beim Einschrauben des Einheitsverbinders geschont werden können. Im Vergleich zu Spitzgewinden, welche sich in das Innengewinde schneiden und somit das Keramikmaterial beschädigen können, kann ein solcher Einheitsverbinder mit einem Trapezgewinde daher den Langzeiterfolg des Dentalimplantats erhöhen.

In einer Ausgestaltung ist der Einheitsverbinder aus Metall, vorzugsweise aus rostfreiem Stahl und/oder Titan, gefertigt.

In einer Ausgestaltung entspricht der grösste Querdurchmesser des Einheitsverbinders in der unteren Hälfte des Einheitsverbinders dem grössten Querdurchmesser der Bohrung des Basiskörpers derart, dass der Einheitsverbinder bei der Aufnahme in die Bohrung führbar ist.

Optional besteht zwischen dem Bereich des Einheitsverbinders, welcher sich nach dem Einsetzen im Basiskörper befindet, und der Innenwand der Bohrung des Basiskörpers ein Spiel, so dass bei der Einführung des Einheitsverbinders in den Basiskörper Beschädigungen aufgrund von Reibung minimiert werden können. Das Spiel ist vorteilhafterweise aber so klein, dass eine zuverlässige Führung bzw. Zentrierung des Einheitsverbinders bereitgestellt wird.

In einer Ausgestaltung entspricht ein Querdurchmesser des Einheitsverbinders dem kleinsten Querdurchmesser der Bohrung des Abutments derart, dass das Abutment beim Einsetzen auf den Basiskörper durch den Einheitsverbinder führbar ist.

Der Einheitsverbinder bietet daher den Vorteil, dass das Abutment beim Positionieren auf den Basiskörper geführt bzw. zentriert werden kann. Vorzugsweise besteht zwischen dem Einheitsverbinder und der Innenwand der Bohrung des Abutments ein Spiel, so dass bei der Positionierung des Abutments auf den Basiskörper Beschädigungen aufgrund von Reibung minimiert werden können. Das Spiel ist vorteilhafterweise aber so klein, dass eine zuverlässige Führung bzw. Zentrierung des Abutments bereitgestellt wird.

In einer Ausgestaltung entspricht der grösste Querdurchmesser der Bohrung des Abutments dem Querdurchmesser der Hülse derart, dass das Abutment in Querrichtung an der Hülse abstützbar ist.

In Ausgestaltungen mit einer abgestuften Bohrung des Abutments und einem Einheitsverbinder mit einem zylindrischen Schaft und einer Hülse entspricht mit Vorteil der kleinere Durchmesser der Bohrung im dem Basiskörper zugewandten unteren Bereich des Abutments dem Aussendurchmesser des zylindrischen Schafts des Einheitsverbinders. Der grössere Durchmesser der Bohrung im dem Basiskörper abgewandten oberen Bereich des Abutments, welcher den Hülsenaufnahmebereich bildet, entspricht mit Vorteil dem Aussendurchmesser der Hülse, so dass sich das Abutment an der Hülse abstützen kann und bei auftretenden Querkräften die Stabilität des Dentalimplantats erhöht werden kann. Im unteren Bereich der Bohrung des Abutments kann sich das Abutment bei auftretenden Querkräften mit Vorteil am zylindrischen Schaft oder teilweise am zweiten Endbereich des Einheitsverbinders abstützen.

In einer Ausgestaltung weist das Abutment einen Fortsatz und der Basiskörper eine Aussparung auf, wobei der Fortsatz in die Aussparung einsteckbar ist. Bevorzugt wird durch den Fortsatz des Abutments und der Aussparung des Basiskörpers ein verdrehsicherer Formschluss bereitgestellt. In einer Variante wird der verdrehsichere Formschluss durch eine radial ungleichmässige Struktur des Fortsatzes (d.h. in tangentialer Richtung) bereitgestellt. In einer weiteren Variante weist der Fortsatz radiale Vorsprünge auf, welche in tangentialer Richtung weisende Anlageflächen ausbilden und in radiale Nuten der Aussparung des Basiskörpers eingreifen können.

### Figurenbeschrieb

Die Erfindung soll nachfolgend anhand von Ausführungsbeispielen im Zusammenhang mit den Figuren und der dazugehörigen Beschreibung näher erläutert werden. Es zeigen:
- Fig. 1: eine Schnittdarstellung einer ersten Ausführungsform eines erfindungsgemässen Einheitsverbinders;
- Fig. 2: eine Schnittdarstellung einer zweiten Ausführungsform eines erfindungsgemässen Einheitsverbinders;
- Fig. 3: eine Schnittdarstellung eines Dentalimplantats mit einer ersten Ausführungsform eines Einheitsverbindungssystems;
- Fig. 4: eine Schnittdarstellung eines Dentalimplantats mit einer zweiten Ausführungsform eines Einheitsverbindungssystems;
- Fig. 5: eine Schnittdarstellung des in Fig. 3 gezeigten Dentalimplantats entlang der in Fig. 3 eingezeichneten Schnittlinie A-A;
- Fig. 6: eine schematische Explosionsdarstellung einer weiteren Ausführungsform eines erfindungsgemässen Dentalimplantates;
- Fig. 7: eine schematische Perspektivansicht eines erfindungsgemässen Buchsenkörpers des in Fig. 6 dargestellten Dentalimplantates;
- Fig. 8: eine schematische Perspektivansicht des in Fig. 6 dargestellten Dentalimplantates in einem Vormontagezustand, in welchem der Buchsenkörper in einem Basiskörper des Dentalimplantates eingesetzt ist;
- Fig. 9: eine schematische Querschnittsansicht des in Figur 8 gezeigten Dentalimplantates im Vormontagezustand entlang der in Fig. 8 eingezeichneten Schnittlinie B-B;
- Fig. 10: eine schematische Querschnittsansicht des in Figs. 8 und 9 gezeigten Dentalimplantates in einem weiteren Vormontagezustand entlang einer in Fig. 9 eingezeichneten Schnittlinie C-C;
- Fig. 11: eine schematische Perspektivansicht eines Buchsenkörpers und eines Verbinders des in Fig. 6 dargestellten Dentalimplantates in einem zusätzlichen Vormontagezustand;
- Fig. 12: eine schematische Querschnittsansicht entlang einer Mittelachse eines Abutments und eines Basiskörpers des in Fig. 6 gezeigten Dentalimplantates in einem weiteren zusätzlichen Vormontagezustand;
- Fig. 13: eine schematische Querschnittsansicht entlang einer Mittelachse eines Verbinders, eines Abutments und eines Buchsenkörpers des in Fig. 6 gezeigten Dentalimplantates in einem ergänzenden Vormontagezustand; und
- Fig. 14: eine schematische Querschnittsansicht entlang der Mittelachse des in Fig. 6 gezeigten Dentalimplantates in einem Endmontagezustand.

### Ausführung der Erfindung

Im Folgenden ist die Erfindung beispielhaft anhand möglicher Ausführungsformen mit Bezug auf die beigefügten Zeichnungen genauer beschrieben. Die bei diesen Ausführungsformen dargestellten Merkmalskombinationen dienen lediglich Anschauungszwecken. Einzelne Merkmale können nach Massgabe ihrer oben beschriebenen Vorteile auch weggelassen werden, wenn es bei bestimmten Anwendungen auf den Vorteil des jeweiligen Merkmals nicht ankommt. In der Beschreibung der Ausführungsformen sind der Einfachheit halber gleiche Merkmale und Elemente mit gleichen Bezugszeichen versehen. Bei unterschiedlichen Ausführungsformen können Merkmale und Elemente mit gleicher oder ähnlicher Funktion mit einem oder mehreren Apostrophen versehen sein, um sie darstellungshalber einer Ausführungsform zuzuordnen, wobei diese Zuordnung nicht als auf die jeweilige Ausführungsform einschränkend aufzufassen ist.

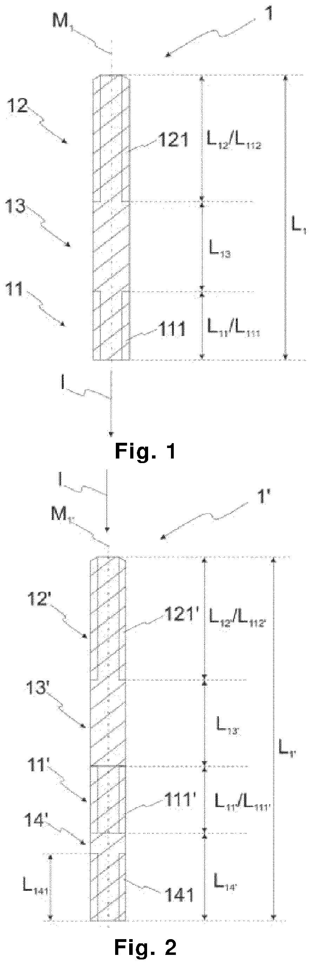

Figur 1 zeigt eine Schnittdarstellung einer ersten Ausführungsform eines erfindungsgemässen Einheitsverbinders 1. Der Einheitsverbinder 1 weist einen Basisabschnitt 11 mit einem ersten Aussengewinde 111 sowie einen Abutmenthalteabschnitt 12 mit einem Haltegewinde 121 auf. Zwischen den Abschnitten 11, 12 weist der Einheitsverbinder einen zylindrischen Schaftabschnitt 13 auf, so dass der Einheitsverbinder 1 die Form eines Stehbolzens mit einer Mittelachse M₁ aufweist, entlang welcher der Einheitsverbinders 1 in einer Einsetzrichtung I einzusetzen bzw. einzuschrauben ist.

Der Einheitsverbinder 1 besitzt eine parallel zur Einsetzrichtung I gemessene Gesamtlänge L₁. Der Basisabschnitt 11 und das Aussengewinde 111 besitzen eine parallel zur Einsetzrichtung I gemessene Länge L₁₁ bzw. L₁₁₁, die das 0.2 bis 0.3-fache, vorzugsweise das 0.25-fache entsprechend einem Viertel der Gesamtlänge L₁ betragen. Der Abutmenthalteabschnitt 12 und das Haltegewinde 121 besitzen eine parallel zur Einsetzrichtung I gemessene Länge L₁₂ bzw. L₁₁₂, die das 0.3 bis 0.6-fache, vorzugsweise das 0.4 bis 0.5-fache, höchst vorzugsweise das 0.416-fache entsprechend fünf Zwölftel der Gesamtlänge L₁ betragen. Der Schaftabschnitt 13 besitzt eine parallel zur Einsetzrichtung I gemessene Länge L₁₃, die das 0.3 bis 0.4-fache, vorzugsweise das 0.333-fache entsprechend einem Drittel der Gesamtlänge L₁ beträgt.

Der Einheitsverbinder 1 ist beispielsweise aus rostfreiem Stahl, Titan und/oder Keramik gefertigt. In bestimmten Ausführungsformen kann es besonders vorteilhaft sein, den Einheitsverbinder aus rostfreiem Stahl und/oder Titan zu fertigen, insbesondere wenn er innerhalb eines ansonsten keramischen Implantats hermetisch abgeschlossen von Kiefer und Zahnfleisch isoliert aufgenommen ist, so dass die Frage der Biokompatibilität für den Einheitsverbinder 1 selber von eher zweitrangiger Bedeutung und einer Optimierung seiner mechanischen Eigenschaften nachstehen kann.

Figur 2 zeigt eine Schnittdarstellung einer zweiten Ausführungsform eines Einheitsverbinders 1' mit einem Basisabschnitt 11' und einem ersten Aussengewinde 111' sowie einem Abutmenthalteabschnitt 12' und einem Haltegewinde 121'. An den Basisabschnitt 11' anschliessend ist eine Bolzenverlängerung 14' in geeigneter Weise angebracht. Beispielsweise kann die Bolzenverlängerung 14' mit dem Basisabschnitt 11' mittels einer Schraubverbindung in einer Ausnehmung an der Mittelachse des Basisabschnitts 11' oder mittels einer Klebeverbindung an dessen Stirnfläche verbunden sein. Die Bolzenverlängerung 14' weist ein Verlängerungsgewinde 141 auf, welche mit einem Innengewinde eines Basiskörpers eines Dentalimplantats in Eingriff bringbar ist. Mittels der Bolzenverlängerung 14' ist der Einheitsverbinder 1' verlängerbar und kann daher für lange Dentalimplantate verwendet werden. Alternativ oder zusätzlich kann die Bolzenverlängerung 14' in analoger Art und Weise auch am Abutmenthalteabschnitt 12' angebracht sein, um diesen zu verlängern.

Der Einheitsverbinder 1' besitzt ähnlich wie der Einheitsverbinder 1 eine parallel zur Einsetzrichtung I gemessene Gesamtlänge L_{1'}, die beispielsweise einer Summe der Gesamtlänge L₁ des Einheitsverbinders 1 zuzüglich einer parallel zur Einsetzrichtung I gemessenen Länge L_{14'} der Bolzenverlängerung 14' betragen kann. Der Basisabschnitt 11' und das Aussengewinde 111' besitzen eine parallel zur Einsetzrichtung I gemessene Länge L_{11'} bzw. L_{111'}, die ebenfalls das 0.2 bis 0.3-fache, vorzugsweise das 0.25-fache entsprechend einem Viertel der Gesamtlänge L₁ betragen. Der Abutmenthalteabschnitt 12' und das Haltegewinde 121' besitzen eine parallel zur Einsetzrichtung I gemessene Länge L_{12'} bzw. L_{112'}, die das 0.3 bis 0.6-fache, vorzugsweise das 0.4 bis 0.5-fache, höchst vorzugsweise das 0.416-fache entsprechend fünf Zwölftel der Gesamtlänge L₁ betragen. Der Schaftabschnitt 13' besitzt eine parallel zur Einsetzrichtung I gemessene Länge L_{13'}, die das 0.3 bis 0.4-fache, vorzugsweise das 0.333-fache entsprechend einem Drittel der Gesamtlänge L₁ beträgt.

Mit Hilfe der Bolzenverlängerung 14' können die oben genannten vom Einheitsverbinder 1' abgeleiteten Längenverhältnisse zwischen den einzelnen Abschnitten des Einheitsverbinders 1' bezogen auf seine Gesamtlänge L_{1'} den jeweiligen Anforderungen gemäss verschoben bzw. angepasst sein. Die Verschiebung bzw. Anpassung der Längenverhältnisse ergibt sich aus der Länge L_{14'} der Bolzenverlängerung 14', wobei die Gesamtlänge L₁ des Einheitsverbinders 1 eine Art Grundlänge darstellt, die mit Hilfe verschiedener Typen der Bolzenverlängerung 14' variiert werden kann.

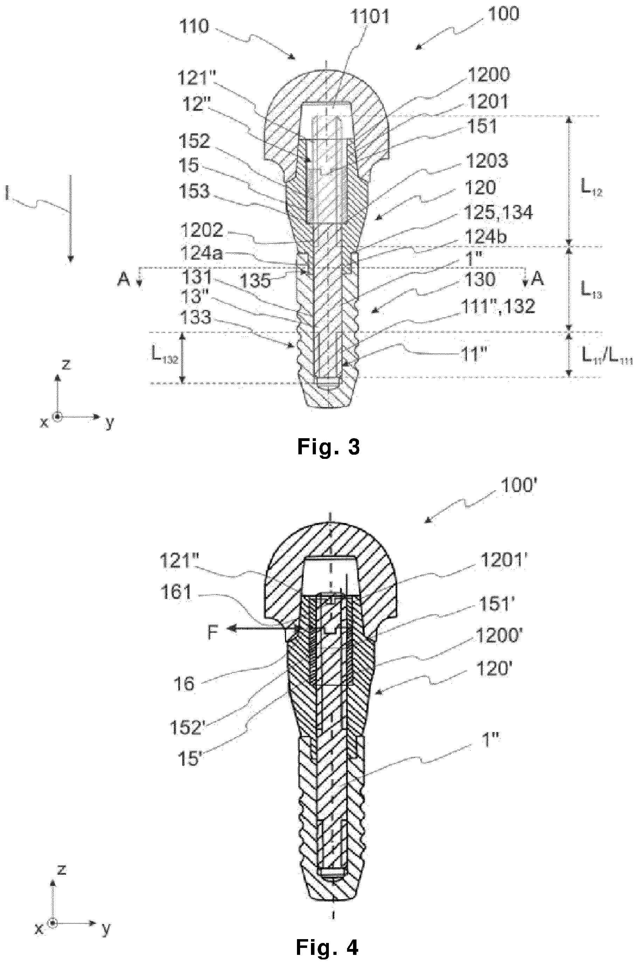

Im vorliegenden Ausführungsbeispiel des Einheitsverbinders 1' mit Bolzenverlängerung 14' beträgt die Länge L_{14'} das 0.3 bis 0.4-fache, vorzugsweise das 0.333-fache entsprechend einem Drittel der Gesamtlänge L₁. Somit kann die Länge des Verlängerungsgewindes wiederum der Länge L_{111'} des Aussengewindes entsprechen. Der Einheitsverbinder 1 bzw. 1' kann somit durch Bolzenverlängerungen 14' jeweils inkrementell um das 0.3 bis 0.4-fache, vorzugsweise das 0.333-fache entsprechend einem Drittel der Gesamtlänge L₁ verlängert oder wahlweise verkürzt werden, wenn er ursprünglich mit wenigstens einer Bolzenverlängerung 14' versehen und durch ein Abnehmen der wenigstens einen Bolzenverlängerung 14' ablängbar ausgestaltet ist. Figur 3 zeigt eine Schnittdarstellung eines Dentalimplantats 100 mit einer ersten Ausführungsform eines Einheitsverbindungssystems. Das Dentalimplantat 100 umfasst einen Basiskörper 130, ein Abutment 120 und einen Zahnaufbau 110. Die Einsetzrichtung I des Dentalimplantats 100 ist mit einem Pfeil dargestellt. Der Basiskörper 130 und das Abutment 120 sind vorzugsweise aus einem Keramikmaterial gefertigt. Der Basiskörper 130 weist ein Aussengewinde 133 in Form eines Rundgewindes auf. Weiter weist der Basiskörper 130 eine Bohrung 131 in Form eines Sackloches auf, wobei die Bohrung 131 in der dem Abutment 120 abgewandten unteren Hälfte des Basiskörpers 130 ein Innengewinde 132 aufweist. Um die Angaben "oben" oder "unten" zu verdeutlichen, ist in der Figur das Koordinatensystem eingezeichnet. Das Innengewinde 132 ist mit einem ersten Aussengewinde 111" im Basisabschnitt 11" eines Einheitsverbinders 1", der in die Bohrung 131 eingeführt ist, in Eingriff gebracht.

Die Länge L₁₁₁ des ersten Aussengewindes 111" unterschreitet geringfügig eine parallel zur Einsetzrichtung I gemessene Länge L₁₃₂ des Innengewindes 132. Das Innengewinde 132 ist als Rundgewinde ausgebildet. Der Durchmesser der Bohrung 131 entspricht dem Durchmesser des Einheitsverbinders 1", sodass der Einheitsverbinder 1" beim Einsetzen in den Basiskörper 130 geführt wird. Das Abutment 120 weist eine Durchgangsbohrung 1200 mit oberem Bereich 1201 und unterem Bereich 1202 auf, wobei der Durchmesser der Durchgangsbohrung 1200 im oberen Bereich 1201 grösser als der Durchmesser der Durchgangsbohrung 1200 im unteren Bereich 1202 ist. Der obere Bereich 1201 grenzt an den unteren Bereich 1202 über eine Schulter 1203 an. Der Durchmesser der Durchgangsbohrung 1200 im unteren Bereich 1202 entspricht dem Durchmesser des zylindrischen Schaftabschnitts des Einheitsverbinders 1", so dass das Abutment 120 beim Aufsetzen auf den Basiskörper 130 durch den zylindrischen Schaftabschnitt 13" des Einheitsverbinders 1" geführt wird. Die Länge L₁₃ des zylindrischen Schaftabschnitts 13" ist vorteilhafter Weise so bemessen, dass er sowohl das Abutment 120 als auch den Basiskörper optimal seitlich stützt und etwaige Quer und/oder Scherkräfte möglichst weit von Basisabschnitt 11" und Abutmenthalteabschnitt 12" entfernt aufnimmt sowie abgibt.

In die Durchgangsbohrung 1200 ist im oberen Bereich 1201 ein Halteelement 15 eingesetzt, welche mit dem Haltegewinde 121" im Abutmenthalteabschnitt 12" des Einheitsverbinders 1" in Eingriff gebracht ist, bzw. über ein Innengewinde 152 des Halteelements 15 aufgeschraubt ist. Der Abutmenthalteabschnitt 12" weist eine Länge L₁₂ auf. Das Halteelement 15 ist ebenfalls aus rostfreiem Stahl, Titan und/oder Keramik gefertigt. Der Aussendurchmesser des Halteelements 15 entspricht dem Durchmesser des oberen Bereichs 1201 der Durchgangsbohrung 1200 des Abutments 120, welche den Hülsenaufnahmebereich bildet, so dass das Abutment 120 bei auftretenden Querkräften an das Halteelement 15 anliegen kann, was die Stabilität des Dentalimplantats 100 erhöht. Zwischen der seitlichen Aussenfläche des Halteelements 15 und der seitlichen Innenfläche des oberen Bereichs 1201 der Durchgangsbohrung 1200 besteht ein Spalt, welcher ein Spiel sicherstellt. Das Halteelement 15 weist Eingriffsmittel 151 in Form von Kerben auf, welche mit einem geeigneten Schlüssel (nicht gezeigt) in Eingriff gebracht werden können.

Mit dem geeigneten Werkzeug bzw. Schlüssel kann das Halteelement 15 mittels der Eingriffsmittel 151 auf den Abutmenthalteabschnitt 121" des Einheitsverbinders 1" aufgeschraubt werden. Das Halteelement 15 weist ein Innengewinde 152 auf, welche mit dem Haltegewinde 121" des Einheitsverbinders 1" in Eingriff gebracht ist. Durch das Aufschrauben des Halteelements 15 wird eine Wirkverbindung zwischen dem Einheitsverbinder 1" und dem Abutment 120 derart hergestellt, dass das Abutment 120 durch das Halteelement 15 über die Schulter 1203 auf den Basiskörper 130 gepresst wird und so eine abgedichtete formschlüssige Verbindung zwischen dem Abutment 120 und dem Basiskörper 130 hergestellt wird. Beim Aufschrauben des Halteelements 15 liegt dabei die Kontaktfläche 125 des Abutments 120 auf der Kontaktfläche 134 des Basiskörpers 130 an.

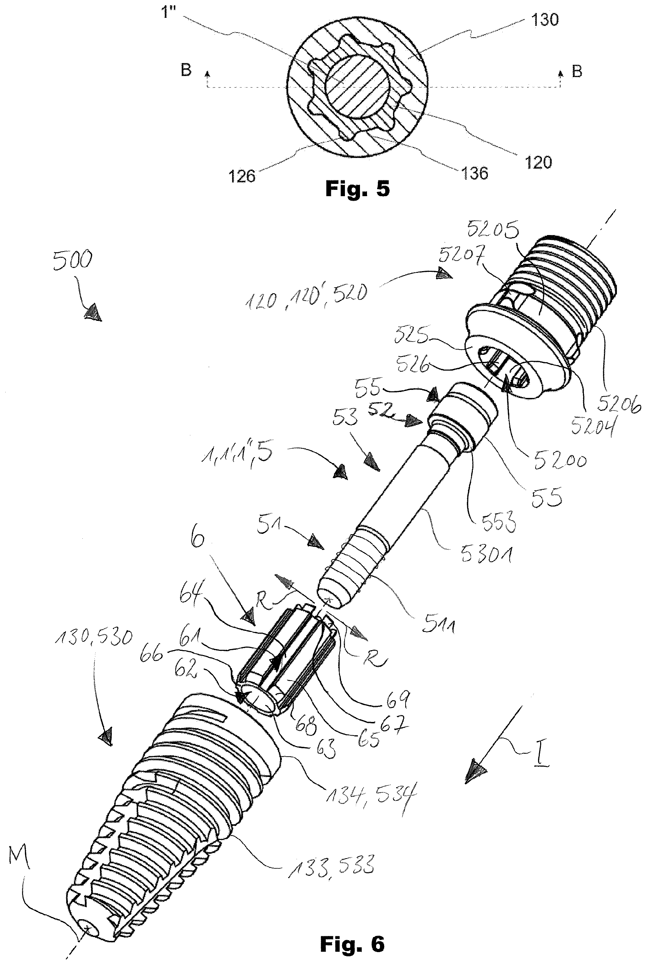

Das Abutment 120 weist weiter einen Fortsatz 124 a,b auf, welcher in eine formpassende Aufnahme 135 in Form einer Vertiefung des Basiskörpers 130 aufgenommen ist. Der Fortsatz 124 a,b ist in radialer Richtung asymmetrisch ausgebildet, so dass ein verdrehsicherer Formschluss sichergestellt wird. In Querschnitt (in y-Richtung) weist der Fortsatz 124 a,b Vorsprünge auf, welche in Fig. 5 im Querschnitt gezeigt sind. In der Figur 3 oder 4 ist zu sehen, dass der Abutmenthalteabschnitt 12" des Einheitsverbinders 1" über das Abutment 120 hinausragt. Vor dem Aufsetzen des Zahnaufbaus 110 kann der Einheitsverbinder 1" bei Bedarf im Abutmenthalteabschnitt 12" abgelängt werden, falls der Überstand zu gross sein sollte. Alternativ oder in Ergänzung kann eine Ausnehmung 1101 im Zahnaufbau 110, wie in der Figur gezeigt, genutzt werden, welche den Überstand des Abutmenthalteabschnitts 12" aufnimmt.

Figur 4 zeigt eine zweite Ausführungsform eines erfindungsgemässen Dentalimplantats 100'. Im Unterschied zum in Figur 3 gezeigten Dentalimplantat 100 besitzt das Dentalimplantat 100' ein Abutment 120', dessen parallel zur Einsetzrichtung I gemessene Länge grösser ist als die parallel zur Einsetzrichtung I gemessene Länge des Abutments 120. Dementsprechend ragt ein oberes Ende eines Einheitsverbinders 1" des Dentalimplantats 100' weniger aus der Durchgangsbohrung 1200' heraus über dem oberen Rand des Abutments 120' hervor als beim Dentalimplantat 100.

Das Dentalimplantat 100' ist mit einem Zusatzhalteelement 16 versehen. Das Zusatzhalteelement 16 ist an das Halteelement 15' anliegend auf das Haltegewinde 121" des Einheitsverbinders 1" aufgeschraubt. Das Zusatzhalteelement 16 weist ein Innengewinde auf, welche mit dem Haltegewinde 121" des Einheitsverbinders 1" in Eingriff gebracht ist. Das Zusatzhalteelement 16 weist Eingriffsmittel 161 auf, mittels welchen das Zusatzhalteelement 16 auf das Haltegewinde 121" aufgeschraubt werden kann.

Das Zusatzhalteelement 16 erhöht die Stabilität des Dentalimplantats 100', da die Fläche, über welche das Abutment 120' abgestützt werden kann, erhöht wird. Die Länge des Halteelements 15' und die Länge des Zusatzhalteelements 16 entspricht fast der Länge des oberen Bereichs 1201' der Durchgangsbohrung 1200'. Somit kann das Abutment 120' bei auf das Zahnimplantat 100' einwirkenden Querkräften sowohl am vorzugsweise hülsenförmigen Halteelement 15' als auch am ebenfalls vorzugsweise hülsenförmigen Zusatzhalteelement 16 seitlich anliegen.

Illustrativ ist in der Figur 4 der Doppelpfeil F gezeigt, welcher auftretende Querkräfte darstellen soll. Die Kräfte F können zu Drehmomenten führen, welche ohne Halteelemente oder mit kurzen Halteelementen im Wesentlichen auf den unteren Bereich der Durchgangsbohrung 1200' des Abutments 120' konzentriert sein würden. Lange Halteelemente 15' oder Zusatzhalteelemente 16 ermöglichen bei Querkräften F ein seitliches Abstützen des Abutments 120', so dass die auftretenden Drehmomente im Wesentlichen entlang der gesamten Länge der Durchgangsbohrung 1200' verteilt und aufgenommen werden können.

Figur 5 zeigt das in der Figur 3 gezeigte Dentalimplantat 100 in einer schematischen Querschnittsansicht entlang der in Figur 3 eingezeichneten Schnittlinie A-A in einem Bereich, in welchem der Fortsatz 124 a, b in die Aufnahme 135 eingreift. Am Fortsatz 124 a, b aussen sind sich radial vom Fortsatz 124 a, b weg erstreckende vorsprungartige Positivelemente 126 ausgeformt, die parallel zur Einsetzrichtung I verlaufen. Die Aufnahme 135 ist mit ebenfalls parallel zur Einsetzrichtung I verlaufenen Negativelementen 136 versehen, die komplementär zu den Positivelementen 126 ausgestaltet sind.

Die Positivelemente 126 wirken derart formschlüssig mit den Negativelementen 136 zusammen, dass im zusammengesetzten Zustand Relativbewegungen, insbesondere Drehbewegungen, des Abutments 120 gegenüber dem Basiskörper 130 unterbunden sind. Zugleich definieren Positivelemente 126 und Negativelemente 136 gemeinsam ein kreisförmiges Raster von Drehpositionen, entlang denen eine Rotationsausrichtung von Abutment 120 und Basiskörper 130 vor dem Zusammensetzen relativ zueinander in inkrementellen Schritten frei gewählt werden kann.

Entsprechend der Beschaffenheit der Haltegewinde 121, 121' als solche sowie durch Ihre variable Positionierbarkeit entlang der Einsetzrichtung I dank der beschriebenen Verlänger- und/oder Verkürzbarkeit stellen erfindungsgemässe Einheitsverbinder 1, 1' eine Vielzahl von entlang der Einsetzrichtung I voneinander beabstandeten Haltepositionen für das Abutment 120, 120' bereit.

Fig. 6 zeigt eine schematische Explosionsdarstellung einer weiteren Ausführungsform eines erfindungsgemässen Dentalimplantates 500. Das Dentalimplantat 500 umfasst ein Abutment 520, einen Basiskörper 530, einen Verbinder 5 und einen Buchsenkörper 6. Abutment 520 und Basiskörper 530 sind vorzugweise aus keramischem Material hergestellt. Verbinder 5 und Buchsenkörper 6 sind vorzugsweise aus einem nichtkeramischen Material hergestellt, beispielsweise aus einem Metall, einer Metalllegierung, einem Kunststoff und/oder Karbonfasern. Das Dentalimplantat 500 besitzt eine Mittelachse M. Abutment 520, Basiskörper 530, Verbinder 5 und Buchsenkörper 6 können im wesentlichen rotationssymmetrisch zur Mittelachse M ausgestaltet sein. Eine radiale Richtung R erstreckt sich radial von der Mittelachse M weg. Wie bei den oben beschriebenen Ausführungsformen des Dentalimplantates 100, 100' ist der Verbinder 5 und hier zusätzlich der Buchsenkörper 6 in der Einsetzrichtung I in den Basiskörper 530 einsetzbar ausgestaltet.

Das Abutment 520 kann im Wesentlichen wie die oben beschriebenen Ausführungsformen des Abutments 120, 120' ausgestaltet sein. Entsprechend besitzt das Abutment 520 eine Durchgangsbohrung 5200. In der Durchgangsbohrung 5200 sind Positivelemente 526 angeordnet, die sich entgegen der radialen Richtung R von einer Innenumfangsfläche 5204 der Durchgangsbohrung 5200 weg in Richtung zur Mittelachse M hin erstrecken. Um die Durchgangsbohrung 5200 herum ist eine Kontaktfläche 525 am Abutment 520 ausgeformt, die im Wesentlichen in Richtung der Mittelachse bzw. Einsetzrichtung I und somit in eine axiale Richtung des Dentalimplantates 500 weist. Des Weiteren sind entlang eines Aussenumfangs 5205 des Abutments 520 ein Prothetikgewinde 5206 sowie Arretierungselemente 5207 am Abutment 520 ausgeformt. Das Prothetikgewinde 5206 dient dazu, einen Zahnaufbau, beispielsweise den oben beschriebenen Zahnaufbau 110, am Abutment 520 zu befestigen. Die Arretierungselemente 5207 dienen dazu, den Zahnaufbau in einer gewünschten Drehposition um die Mittelachse M herum am Abutment 520 zu arretieren.

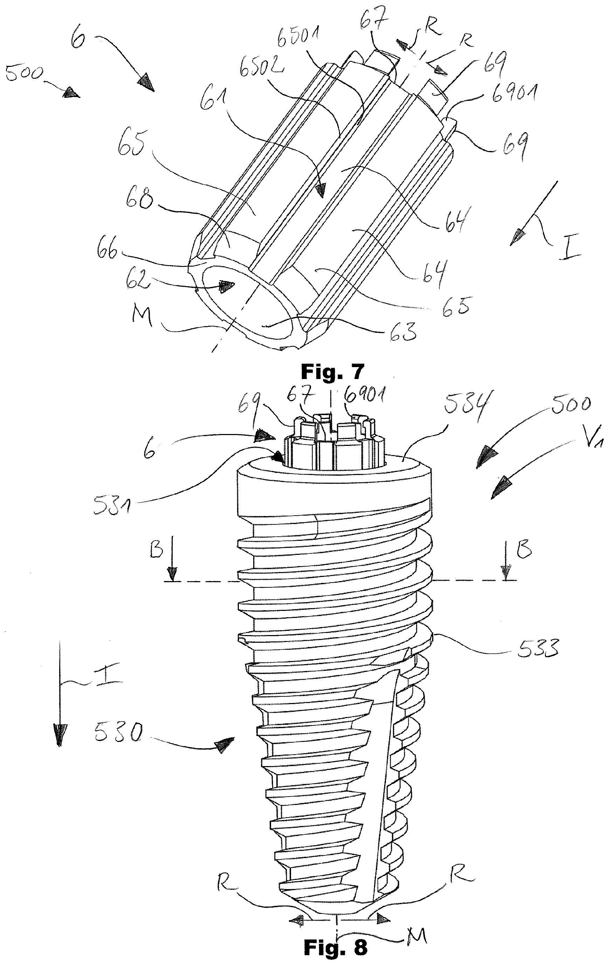

Der Basiskörper 530 kann im Wesentlichen wie der oben beschriebene Basiskörper 130 ausgestaltet sein und dazu ein Aussengewinde 533 besitzen, mit dem der Basiskörper 530 in einen Kieferknochen einschraubbar ist. Ebenfalls besitzt der Basiskörper 530 eine Bohrung 531, in der ein Innengewinde 532 zum Einschrauben des Verbinders 5 in den Basiskörper 530 angeordnet ist (s. Figs. 8 bis 10, 12 und 14). Eine am Basiskörper 530 ausgestaltete Kontaktfläche 534 weist entgegen der Einsetzrichtung I und ist dazu ausgestaltet, bündig abschliessend an der Kontaktfläche 525 das Abutments 520 anzuliegen.

Der Verbinder 5 kann im Wesentlichen wie eine oben beschriebene Ausführungsform des Einheitsverbinders 1, 1', 1" ausgestaltet sein. So besitzt der Verbinder 5 einen Basisabschnitt 51, an dem ein Basisgewinde 511 in Form eines unteren Aussengewindes ausgeformt ist. Des Weiteren besitzt der Verbinder 5 einen Abutmenthalteabschnitt 52, an dem ein Halteelement 55 ausgeformt ist, das alternativ auch als separates Halteelement 15, 15' wie beim Einheitsverbinder 1,1', 1" ausgestaltet zur Aufnahme an einem am Verbinder 5 ausgeformten Haltegewinde 121, 121', 121" in Form eines oberen Aussengewindes bereitgestellt werden kann. Wie das Halteelement 15, 15' bietet das Halteelement 55 eine in Einsetzrichtung I weisende Haltefläche 553. Zwischen Basisabschnitt 51 und Abutmenthalteabschnitt 52 ist ein Schaftabschnitt 53 des Verbinders 5 angeordnet, der dazu ausgestaltet ist, im Buchsenkörper 6 aufgenommen zu sein und zur Abstützung im Buchsenkörper 6 in radialer Richtung R eine Aussenumfangsfläche 5301 bietet.

Der Buchsenkörper 6 ist hülsenartig ausgestaltet und besitzt einen im Wesentlichen zylindrischen Mantelabschnitt 61, der eine Durchgangsöffnung 62 zur Aufnahme des Verbinders 5 bereitstellt. In der Durchgangsöffnung 62 ist eine im Wesentlichen zylindrische Innenumfangsfläche 63 des Buchsenkörpers 6 dazu ausgestaltet, möglichst unter geringem Spiel bzw. spielfrei an der Aussenumfangsfläche 5301 des Verbinders 5 anliegend den Verbinder 5 zu umgreifen. Auf der Aussenseite bietet der Mantelabschnitt 61 eine im Wesentlichen zylindrische Aussenumfangsfläche 64. Formschlusselemente 65 des Buchsenkörpers 6 erheben sich in radialer Richtung R von der Aussenumfangsfläche 64 weg und erstrecken sich von einem in Einsetzrichtung I weisenden unteren Rand 66 des Buchsenkörpers 6 im Wesentlichen bis zu einem entgegen der Einsetzrichtung I weisenden oberen Rand 67 des Buchsenkörpers 6. In Richtung zum unteren Rand 66 hin sind die Formschlusselemente 65 jeweils mit einer Einführschräge 68 versehen, die dabei hilft, den Buchsenkörper 6 ordnungsgemäss in den Basiskörper 530 einzuführen. Am oberen Rand 67 sind Laschen 69 ausgeformt, die sich entgegen der Einsetzrichtung I vom oberen Rand 67 weg erstrecken.

Fig. 7 zeigt eine schematische Perspektivansicht des Buchsenkörpers 6. Hier wird deutlich, dass die Formschluss Elemente 65 einen in einer Projektion entlang der Einsetzrichtung I sich in radialer Richtung R leicht verjüngenden und somit im Querschnitt im Wesentlichen trapezförmig ausgestalteten Aussenabschnitt 6501 sowie einen in einer Projektion entlang der Einsetzrichtung I im wesentlichen Kreissegmentförmig ausgestalteten Innenabschnitt 6502 aufweisen. Durch die Verjüngung des Aussenabschnitts 6501 wird zum einen ein Verkanten des Buchsenkörpers 6 beim Einsetzen des Buchsenkörpers 6 in den Basiskörper 530 verhindert. Zum anderen hilft die trapezförmige Ausgestaltung, Kerbwirkungen des Buchsenkörpers 6 im Basiskörper 530 zu vermeiden.

Des Weiteren erstrecken sich die Einführschrägen 68 lediglich entlang des Aussenabschnitts 6501 der Formschlusselemente 65, wodurch der Innenabschnitt 6502 der Formschlusselemente einen Teil des unteren Randes 66 bildet, was wiederum dabei hilft, den Buchsenkörper 6 möglichst spielfrei in einer gewünschten Drehposition um die Mittelachse M herum im Basiskörper 530 aufzunehmen. Ferner ist an einem distalen Ende der Laschen 69 jeweils ein Rastelement 6901 ausgeformt, das entgegen der radialen Richtung R in Richtung zur Mittelachse M hin von der Lasche 69 hervorragt und dazu dient, den Buchsenkörper 6 am Verbinder 5 zu verrasten, worauf weiter unten im Detail eingegangen wird.

Fig. 8 zeigt eine schematische Perspektivansicht des dargestellten Dentalimplantates 500 in einem Vormontagezustand V₁, in welchem der Buchsenkörper 6 in den Basiskörper 530 des Dentalimplantates 500 eingesetzt ist. Im Vormontagezustand V₁ ist der Buchsenkörper 6 derart in einer Bohrung 531 des Basiskörpers 530 aufgenommen, dass der Buchsenkörper 6 entgegen der Einsetzrichtung I über die Kontaktfläche 534 des Basiskörpers 530 hinaus vom Basiskörper 530 hervorragt. Somit sind Basiskörper 530 und Buchsenkörper 6 im Vormontagezustand V₁ bereit, das Abutment 520 und den Verbinder 5 aufzunehmen.

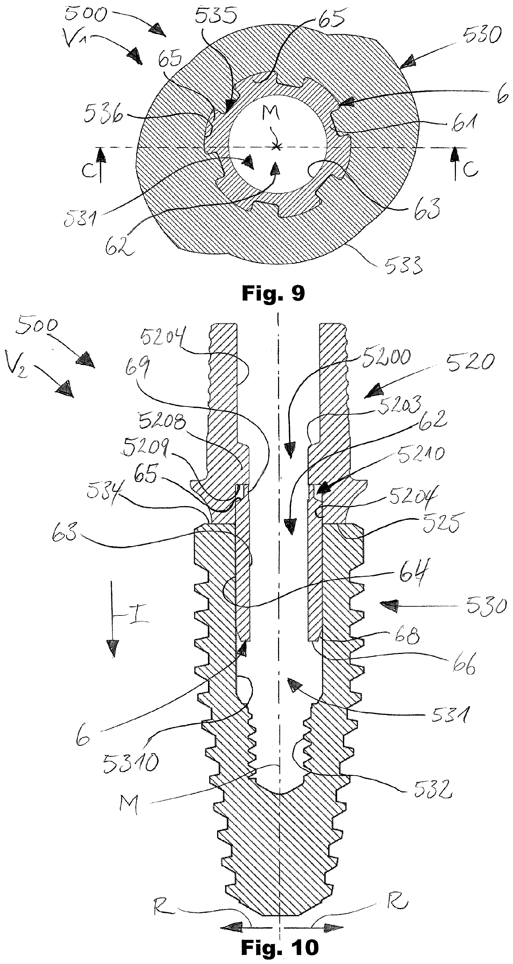

Fig. 9 zeigt eine schematische Querschnittsansicht des in Figur 8 gezeigten Dentalimplantates 500 im Vormontagezustand V₁ entlang der in Fig. 8 eingezeichneten Schnittlinie B-B. Hier wird deutlich, dass der Buchsenkörper 6 mit seiner Aussenumfangsfläche 64 im Wesentlichen bündig an einem Innenumfang einer in der Bohrung 531 im Basiskörper 6 bereitgestellten Aufnahme 535 aufgenommen ist. Die am Buchsenkörper 6 ausgeformten Formschlusselemente 65 greifen formschlüssig in Negativelemente 536 ein, die sich entlang der Aufnahme 535 erstrecken und komplementär zu den Formschlusselementen 65 ausgestaltet sind.

Fig. 10 zeigt eine schematische Querschnittsansicht des in Figs. 8 und 9 gezeigten Dentalimplantates 500 in einem weiteren Vormontagezustand V₂ entlang einer in Fig. 9 eingezeichneten Schnittlinie C-C. Um das Dentalimplantat 500 vom Vormontagezustand V₁ in den weiteren Vormontagezustand V₂ zu überführen, ist das Abutment 520 in Einsetzrichtung I auf den Basiskörper 530 gesetzt, sodass die Kontaktfläche 525 des Abutments 520 auf der Kontaktfläche 534 des Basiskörpers 530 aufliegt. Gemäss in Fig. 10 gezeigter Ansicht liegen von den Formschlusselementen 65 des Buchsenkörpers 6 ausgebildete Abschnitte der Aussenumfangsfläche 64 unterhalb der Kontaktflächen 525, 534 bündig am Innenumfang der Bohrung 531 des Basiskörpers 530 an. Der untere Rand 66 des Buchsenkörpers 6 ist oberhalb eines Innengewindes 532 von diesem in Einsetzrichtung I beabstandet angeordnet.

Der entgegen der Einsetzrichtung I über die Kontaktflächen 525, 534 hinausragende Teil des Buchsenkörpers 6 ist in der im Abutment 520 ausgeformten Durchgangsbohrung 5200 aufgenommen. Die Formschlusselemente 65 des Buchsenkörpers 6 wirken formschlüssig mit den am Abutment 520 ausgeformten Positivelementen 526 zusammen. Die Formschlusselemente 65 des Buchsenkörpers 6 sind sowohl komplementär zu den Positivelementen 526 des Buchsenkörpers 6 als auch komplementär zu den Negativelementen 536 des Basiskörpers 530 ausgestaltet. Somit sichert der Basiskörper 6 eine relative Drehposition des Abutments 520 bezüglich des Basiskörpers 530 um die Mittelachse M.

Des Weiteren ist ähnlich wie beim oben beschriebenen Abutment 120, 120' eine entgegen der Einsetzrichtung I weisende Schulter 5203 in der Durchgangsbohrung 5200 das Abutments 520 angeordnet. Die Schulter 5203 ragt entgegen der radialen Richtung R von der Innenumfangsfläche 5204 des Abutments 520 hervor. Die Schulter 5203 ist in einem Vorsprung 5208 ausgebildet, der sich entgegen der radialen Richtung R von der inneren Umfangsfläche 5204 erhebt. Eine in Richtung der Einsetzrichtung I weisende Seite des Vorsprung 5208 bildet einen Anschlag 5209 aus, an dem die Laschen 69 des Buchsenkörpers 6 entgegen der Einsetzrichtung I zum Anliegen kommen können. Zwischen den Laschen 69 und der Innenumfangsfläche 5204 in radialer Richtung R und oberhalb der Formschlusselemente 65 entgegen der Einsetzrichtung I bis zum Anschlag 5209 befindet sich ein Freiraum 5210, der verhindert, dass vom Buchsenkörper 6, insbesondere dessen Formschlusselementen 65 bzw. der Aussenumfangsfläche 64 eine Kerbwirkung auf das Abutment 520 ausgeübt wird.

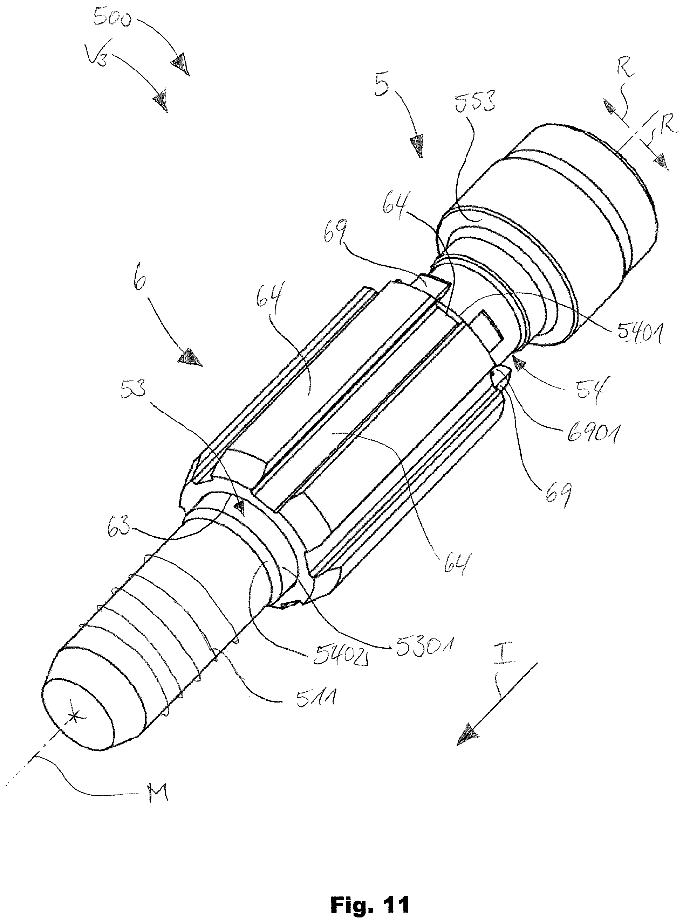

Fig. 11 zeigt eine schematische Perspektivansicht des Buchsenkörpers 6 und des Verbinders 5 in einem zusätzlichen Vormontagezustand V₃. Im zusätzlichen Vormontagezustand V₃ ist der Buchsenkörper 6 am Verbinder 5 gehalten. Der Buchsenkörper 6 umgreift mit seiner Innenumfangsfläche 63 den Schaftabschnitt 53 bzw. liegt mit seiner Innenumfangsfläche 63 an der Aussenumfangsfläche 5301 des Schaftabschnittes 53 an oder ist unter geringem Spiel davon beabstandet, sodass der Verbinder 5 gegenüber dem Buchsenkörper 6 um die Mittelachse M herum gedreht werden kann, der somit eine Art Gleitlager für den Verbinder 5 bereitstellt.

Die Rastelemente 6901 des Buchsenkörpers 6 greifen entgegen der radialen Richtung R in ein am Verbinder 5 in Form einer Ringnut ausgeformtes Gegenrastelement 54 ein, sodass die Rastelemente 6901 sich in einer Projektion entlang der Einsetzrichtung mit einem von einer Seitenwand der Ringnut 54 in deren Übergangsbereich zum Schaftabschnitt 53 ausgebildeten Ringbund 5401 bzw. dem Schaftabschnitt 53 überlappen. Bei am Ringbund 5401 in Einsetzrichtung I anliegenden Rastelementen 6901 ist der obere Rand 67 in Einsetzrichtung I unterhalb des Ringsbundes 5401 angeordnet.

Des Weiteren kann ein in radialer Richtung R gemessene Durchmesser des Schaftabschnittes 53 einen ebenfalls in radialer Richtung R gemessenen Durchmesser des Basisgewindes 511 übersteigen. Somit ist zwischen Schaftabschnitt und Basisgewinde 511 ein weiterer Ringbund 5402 ausgebildet, der im Wesentlichen in Einsetzrichtung I weist. Alternativ kann der Durchmesser des Basisgewindes 511 den Durchmesser des Schaftabschnittes 53 sowie den ebenfalls parallel zu radialen Richtung R gemessenen Innendurchmesser der Durchgangsöffnung 62 des Buchsenkörpers übersteigen, beispielsweise indem das Basisgewinde 511 nach aufschieben des Buchsenkörpers 6 auf den Schaftabschnitt 53 ausgeformt wird. Auf diesem Wege kann der Buchsenkörper 6 ebenfalls zumindest vorübergehend unverlierbar am Verbinder 5 gehalten sein.

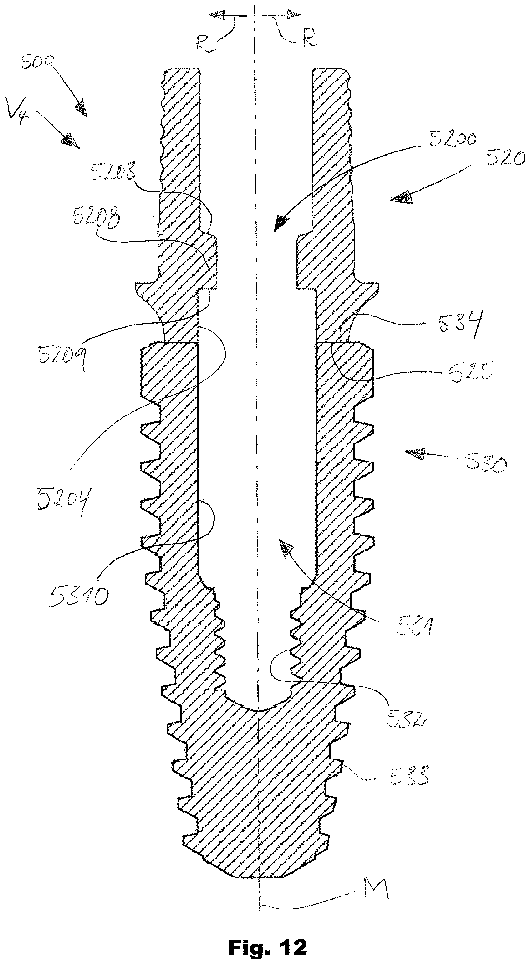

Fig. 12 zeigt eine schematische Querschnittsansicht entlang der Mittelachse M in einem weiteren zusätzlichen Vormontagezustand V₄. Im weiteren zusätzlichen Vormontagezustand V₄ ist das Abutment 520 auf den Basiskörper 530 aufgesetzt, sodass die Kontaktfläche 525 des Abutments 520 auf der Kontaktfläche 534 des Basiskörpers 530 aufliegt und die Innenumfangsfläche 5204 der Durchgangsbohrung 5200 des Abutments 520 in Einsetzrichtung I im Wesentlichen mit einer Innenumfangsfläche 5310 der Bohrung 531 fluchtet. Somit ist das im weiteren zusätzlichen Vormontagezustand V₄ den Basiskörper 530 und das Abutment 520 umfassende Dentalimplantat 500 bereit, einen den Verbinder 5 und den Buchsenkörper 6 im zusätzlichen Vormontagezustand V₃ umfassenden Teil des Dentalimplantats 500 aufzunehmen, um das Abutment 520 am Basiskörper 530 zu fixieren.

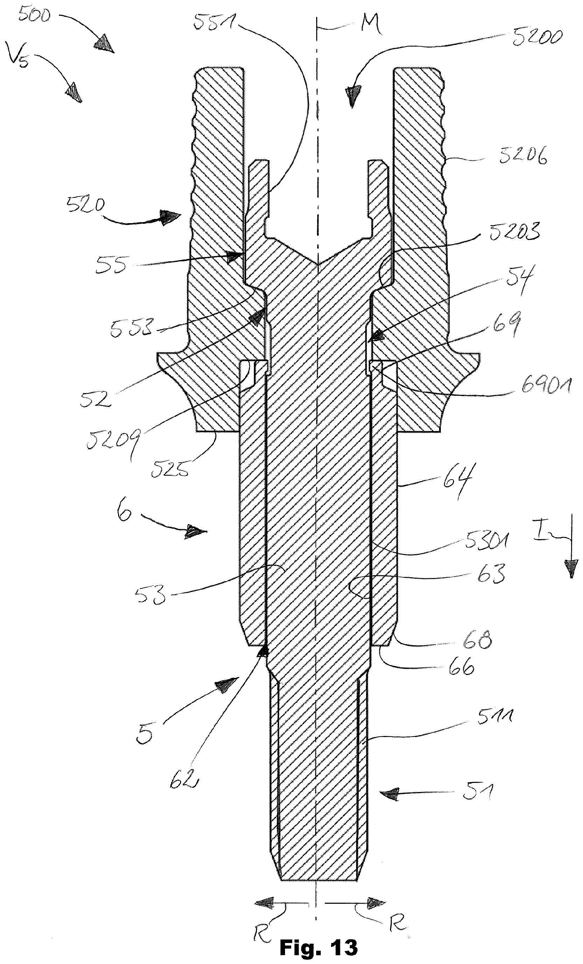

Fig. 13 zeigt eine schematische Querschnittsansicht entlang der Mittelachse M des Verbinders 5, des Abutments 520 und des Buchsenkörpers 6 des in Fig. 6 gezeigten Dentalimplantates 500 in einem ergänzenden Vormontagezustand V₅. Im ergänzenden Vormontagezustand V₅ ist der Verbinder 6 in Einsetzrichtung I in die Durchgangsbohrung 5200 des Abutments 520 eingesetzt, beispielsweise bis die Haltefläche 553 am Halteelement 55 auf der Schulter 5203 des Abutments aufliegt. Anschliessend wird der Buchsenkörper 6 entgegen der Einsetzrichtung I über den Basisabschnitt 51 des Verbinders 5 hinweg auf seinen Schaftabschnitt 53 geschoben, beispielswiese bis die Rastelemente 6901 des Buchsenkörpers 6 in das am Verbinder 5 ausgeformte Gegenrastelement 54 eingreifen und/oder bis die Laschen 69 des Verbinders 5 am Anschlag 5209 des Abutments 520 anliegen. Alternativ oder zusätzlich kann ein Formschluss und/oder eine Klebeverbindung zwischen Buchsenkörper 6 und Abutment 520 dazu dienen, zunächst den Buchsenkörper 6 im Abutment 520 vorzumontieren. Als weitere alternative oder zusätzliche Möglichkeit zu einer Verrastung zwischen Buchsenkörper 6 und Verbinder 5 kann der Buchsenkörper 6 kraftschlüssig, beispielsweise durch Klemmen, und/oder durch Verkleben am Verbinder 5 befestigt sein.

Folglich bilden Verbinder 5, Abutment 520 und Buchsenkörper 6 im ergänzenden Vormontagezustand V₅ eine Art vormontierte Einheit, die dazu bereit ist, in Einsetzrichtung I in den Basiskörper 530 eingesetzt zu werden. Dies kann die Handhabung eines erfindungsgemässen Dentalimplantates 500 stark vereinfachen helfen, weil mit Verbinder 5, Abutment 520 und Buchsenkörper 6 im ergänzenden Vormontagezustand V₅ bereits drei von den hierin gezeigten fünf Komponenten des Dentalimplantates, wobei es sich bei den beiden weiteren Komponenten um Basiskörper 330 und Zahnaufbau 110 handelt, mehr oder weniger unverlierbar miteinander verbunden eingesetzt werden können. Ein Eingriffsmittel 551 zum Betätigen des Verbinders 5 kann dabei durch die Durchgangsbohrung 5200 des Abutments 520 hindurch zugänglich angeordnet sein. Vorteilhafterweise sind Verbinder 5 und/oder Buchsenkörper 6 relativ zum Abutment 520 um die Mittelachse M herum drehbar in der Durchgangsbohrung 5200 des Abutments 520 aufgenommen, sodass der Basisabschnitt 51 mit dem Basisgewinde 511 des Verbinders 5 in das Innengewinde 532 des Basiskörpers 530 (s. Figur 12) eingeschraubt werden kann.

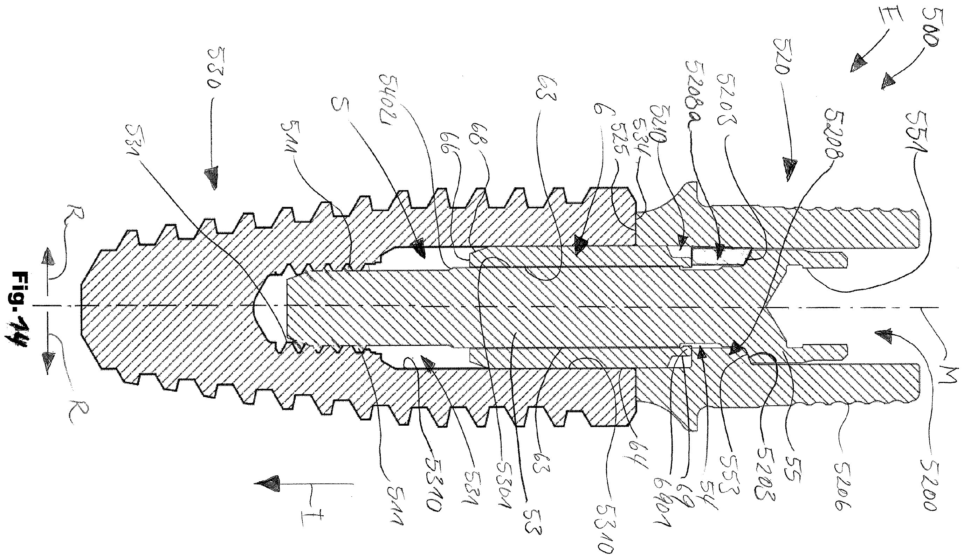

Fig. 14 zeigt eine schematische Querschnittsansicht entlang der Mittelachse M des Dentalimplantates 500 in einem Endmontagezustand E. Das Dentalimplantat 500 kann einerseits in den Endmontagezustand E überführt werden, indem aus dem weiteren Vormontagezustand V₂ der Verbinder 5 in Einsetzrichtung I durch die Durchgangsbohrung 5200 des Abutments 520 und anschliessend durch die Durchgangsöffnung 62 des Buchsenkörpers 6 hindurch in die Bohrung 531 des Basiskörpers 530 geführt wird, wo das Basisgewinde 511 des Verbinders 5 in das Innengewinde 532 des Basiskörpers 530 eingeschraubt wird, bis die Haltefläche 553 des Verbinders 5 auf der Schulter 5203 des Abutments 520 aufliegt und die Kontaktflächen 525, 534 von Abutment 520 und Basiskörper 530 aneinanderpresst werden.

Andererseits kann das Dentalimplantat 500 in den Endmontagezustand E überführt werden, indem Verbinder 5 und Buchsenkörper 6 vereint aus dem zusätzlichen Vormontagezustand V₃ gemeinsam in das Dentalimplantat 500 im weiteren zusätzlichen Vormontagezustand V₄ eingeführt werden, bis sie in der Durchgangsbohrung 5200 des Abutments 520 und der Bohrung 531 des Basiskörpers 530 aufgenommen sind und das Basisgewinde 511 des Verbinders 5 in das Innengewinde 532 des Basiskörpers 530 eingreift, damit dann durch weiteres Einschrauben des Verbinders 5 die Haltefläche 553 des Verbinders 5 auf der Schulter 5203 des Abutment 520 zur Auflage gebracht und schliesslich die Kontaktflächen 525, 534 von Abutment 520 und Basiskörper 530 aufeinander gedrückt werden können.

Eine weitere Möglichkeit, das Dentalimplantat 500 in den Endmontagezustand E zu überführen, besteht darin, Verbinder 5, Abutment 520 und Buchsenkörper 6 aus dem ergänzenden Vormontagezustand V₅ als vormontierte Einheit in Einsetzrichtung I in den Basiskörper 530 einzusetzen. Beispielsweise ist der Verbinder 5 relativ zu Buchsenkörper 6 und Abutment 520 um die Mittelachse M herum drehbar in der Durchgangsbohrung 5200 des Abutments 520 sowie in der Durchgangsöffnung 62 des Buchsenkörpers 6 gehalten und kann somit mit seinem Basisgewinde 511 in das Innengewinde 532 des Basiskörpers 530 eingeschraubt werden, bis die Kontaktflächen 525, 534 von Abutment 520 und Basiskörper 530 möglichst bündig zum gegenseitigen Aufliegen kommen.

Um ein Einschrauben des Verbinders 5 in den Basiskörper 530 zu erleichtern, ist der Verbinder 5 an seinem oberen Ende bzw. im Bereich des Halteelements 55 mit dem Eingriffsmittel 551 versehen. Das Eingriffsmittel 551 kann beispielsweise in Form eines Innensechskants oder Innensechsrunds ausgestaltet sein und ist über die Durchgangsbohrung 5200 des Abutment 520 in Einsetzrichtung I zugänglich. Am Halteelement 55 ist die Haltefläche 553 ausgeformt. Auf der Schulter 5203 aufliegend überträgt das Halteelement 55 in Einsetzrichtung I wirkende Haltekräfte auf das Abutment 520, die vom in das Innengewinde 532 des Basiskörpers 530 eingreifenden Basisgewinde 511 des Verbinders 5 ausgehend im Wesentlichen in axialer Richtung, sprich parallel zur Mittelachse M verlaufen, wobei der Buchsenkörper 6 sandwichartig zwischen Abutment 520 und Basiskörper 530 einerseits sowie Verbinder 5 andererseits in das Dentalimplantat 500 eingebettet dabei hilft, etwaige von der axialen Richtung abweichende Querkräfte und Scherspannungen aufzunehmen und somit die keramischen Komponenten des Dentalimplantates, nämlich das Abutment 520 und den Basiskörper 530 vor Fehlbelastungen und etwaigen Beschädigungen zu schützen.

Des Weiteren ist in Fig. 14 ersichtlich, dass die Schulter 5203 bzw. wenigstens eine aus einer Vielzahl möglicher Schultern 5203, auf welcher die Haltefläche 553 des Verbinders aufliegt, alternativ oder zusätzlich an einem weiteren Vorsprung 5208a ausgebildet sein kann. Der weitere Vorsprung 5208a ist zumindest in einer Projektion entlang der Einsetzrichtung I, ähnlich wie in Fig. 9 gezeigt, vorzugsweise als eine Art Gegenformschlusselement komplementär zu den Formschlusselementen 65 des Buchsenkörpers 6 ausgeformt. Somit kann der weitere Vorsprung 5208a bzw. eine Vielzahl von entlang der Innenumfangsfläche 5204 angeordnete weitere Vorsprünge 5208a jeweils eine Schulter 5203 ausbilden und so ausgestaltet sein, dass zum einen ein Formschluss zwischen Abutment 520 und Buchsenkörper 6 gebildet wird, der Relativbewegungen zwischen Abutment 520 und Buchsenkörper 6 um die Mittelachse M herum verhindert. Zum anderen ermöglicht eine Ausführungsform des Abutments 520 mit entlang der Innenumfangsfläche 5204 quasi unterbrochen angeordneten weiteren Vorsprüngen 5208a anstatt eines ununterbrochenen bzw. durchgehenden Vorsprungs 5208, den gemäss Fig. 11 im Vormontagezustand V₃ mit dem Buchsenkörper 6 kombinierten Verbinder 5 gemeinsam durch das Abutment 520 hindurch in den Basiskörper 530 einzuführen, wobei die Formschlusselemente 65 zwischen den Vorsprüngen 5208a hindurchgeführt werden.

### Bezugszeichenliste

- 1, 1', 1", 5: Einheitsverbinder / Verbinder
- 6: Buchsenkörper
- 61: Mantelabschnitt
- 62: Durchgangsöffnung
- 63: Innenumfangsfläche
- 64: Aussenumfangsfläche
- 65: Formschlusselement
- 6501: Aussenabschnitt
- 6502: Innenabschnitt
- 66: unterer Rand
- 67: oberer Rand
- 68: Einführschräge
- 69: Lasche
- 6901: Rastelement
- 11, 11', 11", 51: Basisabschnitt
- 111, 111', 111", 511: Basisgewinde / unteres Aussengewinde
- 12, 12', 12", 52: Abutmenthalteabschnitt
- 121, 121', 121": Haltegewinde / oberes Aussengewinde
- 13, 13', 13", 53: Schaftabschnitt
- 5301: Aussenumfangsfläche
- 54: Gegenrastelement / Ringnut
- 5401: Ringbund
- 5402: weiter Ringbund
- 14': Bolzenverlängerung
- 141: Verlängerungsgewinde
- 100, 100': Dentalimplantat
- 110: Zahnaufbau
- 1101: Ausnehmung
- 120, 120', 520: Abutment / Prothetik
- 1200, 1200', 5200: Durchgangsbohrung
- 1201, 1201': oberer Bereich der Durchgangsbohrung
- 1202: unterer Bereich der Durchgangsbohrung
- 1203, 5203: Schulter
- 5204: Innenumfangsfläche
- 5205: Aussenumfang
- 5206: Prothetikgewinde
- 5207: Arretierungselement
- 5208, 5208a: Vorsprung
- 5209: Anschlag
- 5210: Freiraum
- 124a, b: Fortsatz
- 125, 525: Kontaktfläche
- 126, 526: Positivelement
- 130, 530: Basiskörper
- 131, 531: Bohrung
- 5310: Innenumfangsfläche
- 132, 532: Innengewinde
- 133, 533: Aussengewinde
- 134, 534: Kontaktfläche
- 135, 535: Aufnahme
- 136, 536: Negativelement
- 15, 15', 55: Halteelement
- 151, 151', 551: Eingriffsmittel
- 152, 152': Innengewinde
- 153, 553: Haltefläche
- 16: Zusatzhalteelement
- 161: Eingriffsmittel

- E: Endmontagezustand
- I: Einsetzrichtung
- L₁₁, L_{11'}: Länge des Basisabschnitts
- L₁₂, L_{12'}: Länge des Abutmenthalteabschnitts
- L₁₃, L_{13'}: Länge des Schaftabschnitts
- L_{14'}: Länge der Bolzenverlängerung
- L₁₁₁, L_{111'}: Länge des ersten Aussengewindes
- L₁₁₂, L_{112'}: Länge des Abutmenthalteabschnitts
- L₁₃₂: Länge des Innengewindes
- L₁₄₁: Länge des Verlängerungsgewindes

- M: Mittelachse
- R: radiale Richtung
- V₁: Vormontagezustand
- V2: weiterer Vormontagezustand
- V₃: zusätzlicher Vormontagezustand
- V₄: weiterer zusätzlicher Vormontagezustand
- V₅: ergänzender Vormontagezustand

## Patentansprüche

1. Dentalimplantat (100, 100', 500), das
einen keramischen Basiskörper (130, 530),
ein keramisches Abutment (120, 120', 520),
einen Verbinder (1, 1', 1", 5) zum Verbinden von Basiskörper (130, 530) und Abutment (120, 120', 520) miteinander, und
einen Buchsenkörper (6) umfasst,
wobei der Buchsenkörper zumindest in einem Endmontagezustand (E) des Dentalimplantates (100, 100', 500) wenigstens teilweise im Basiskörper (130, 530) und/oder im Abutment (120, 120', 520) aufgenommen ist und wobei der Buchsenkörper wenigstens abschnittsweise den Verbinder (1, 1', 1", 5) umgreift, **dadurch gekennzeichnet, dass** der Buchsenkörper (6) mit wenigstens einem Rastelement (6901) versehen ist, das dazu ausgestaltet ist, in ein am Verbinder (1, 1', 1", 5) ausgeformtes Gegenrastelement (54) einzugreifen, um Buchsenkörper (6) und Verbinder (1, 1', 1", 5) zumindest temporär unverlierbar miteinander zu verbinden.

2. Dentalimplantat (100, 100', 500) nach Anspruch 1, **dadurch gekennzeichnet, dass** der Buchsenkörper (6) und/oder der Verbinder (1, 1', 1", 5) wenigstens abschnittsweise aus einem Metall, einer Metalllegierung, einem Kunststoff und/oder einem Kohlefaserstoff gefertigt sind bzw. ist.

3. Dentalimplantat (100, 100', 500) nach Anspruch 1 oder 2, **dadurch gekennzeichnet, dass** der Buchsenkörper (6) zumindest im Endmontagezustand (E) wenigstens teilweise in Basiskörper (130, 530) und Abutment (120, 120', 520) eingreift.

4. Dentalimplantat (100, 100', 500) nach wenigstens einem der oben genannten Ansprüche, **dadurch gekennzeichnet, dass** der Buchsenkörper (6) zumindest im Endmontagezustand (E) über eine am Basiskörper (130, 530) ausgeformte Kontaktfläche (134, 534), die dazu ausgestaltet ist, im Endmontagezustand (E) an einer Kontaktfläche (125, 525) des Abutment (120, 120', 520) anzuliegen, hinweg ragt.

5. Dentalimplantat (100, 100', 500) nach wenigstens einem der oben genannten Ansprüche, **dadurch gekennzeichnet, dass** zumindest im Endmontagezustand (E) das Abutment (120, 120', 520) auf dem Buchsenkörper (6) und/oder dem Basiskörper (130, 530) aufliegt.

6. Dentalimplantat (100, 100', 500) nach wenigstens einem der oben genannten Ansprüche, **dadurch gekennzeichnet, dass** der Buchsenkörper (6) eine im Wesentlichen zylindrische Innenumfangsfläche (63) aufweist.

7. Dentalimplantat (100, 100', 500) nach wenigstens einem der oben genannten Ansprüche, **dadurch gekennzeichnet, dass** ein Innendurchmesser des Buchsenkörpers (6) im Wesentlichen einem Aussendurchmesser zumindest eines Schaftabschnittes (53) des Verbinders (1, 1', 1", 5) entspricht.

8. Dentalimplantat (100, 100', 500) nach wenigstens einem der oben genannten Ansprüche, **dadurch gekennzeichnet, dass** wenigstens ein Formschlusselement (65) an einer Aussenumfangsfläche (64) des Buchsenkörper (6) ausgeformt ist.

9. Dentalimplantat (100, 100', 500) nach Anspruch 8, **dadurch gekennzeichnet, dass** das wenigstens eine Formschlusselement (65) mit einer Einführschräge (68) versehen ist, die zumindest abschnittsweise in eine Einsetzrichtung (I) weist, in welcher der Buchsenkörper (6) in den Basiskörper (130, 530) und/oder das Abutment (120, 120', 520) einsetzbar ausgestaltet ist.

10. Dentalimplantat (100, 100', 500) nach wenigstens einem der oben genannten Ansprüche, **dadurch gekennzeichnet, dass** wenigstens ein Positivelement (126, 526) des Abutments (120, 120', 520) dazu ausgestaltet ist, formschlüssig mit dem Basiskörper (130, 530) und/oder dem Buchsenkörper (6) zusammenzuwirken.

11. Dentalimplantat (100, 100', 500) nach wenigstens einem der oben genannten Ansprüche, **dadurch gekennzeichnet, dass** wenigstens ein Negativelement (136, 536) des Basiskörpers (130, 530) dazu ausgestaltet ist, formschlüssig mit dem Abutment (120, 120', 520) und/oder dem Buchsenkörper (6) zusammenzuwirken.

12. Dentalimplantat (100, 100', 500) nach wenigstens einem der oben genannten Ansprüche, **gekennzeichnet durch** einen keramischen Zahnaufbau (110).

13. Dentalimplantat (100, 100', 500) nach wenigstens einem der oben genannten Ansprüche, **dadurch gekennzeichnet, dass** das wenigstens eine Rastelement (6901) an wenigstens einer Lasche (69) ausgeformt ist, die von einem oberen Rand (67) eines Mantelabschnittes (61) des Buchsenkörpers (6) hervorragt.

14. Dentalimplantat (100, 100', 500) nach wenigstens einem der oben genannten Ansprüche, **dadurch gekennzeichnet, dass** eine minimale innere Weite des Buchsenkörpers (6) kleiner ist als ein Aussendurchmesser eines Basisgewindes (111, 111', 111", 511) des Verbinders (1, 1', 1", 5) zum Einschrauben des Verbinders (1, 1', 1", 5) in den Basiskörper (130, 530).

15. Bausatz für ein Dentalimplantat (100, 100', 500) nach wenigstens einem der oben genannten Ansprüche, mit einem keramischen Basiskörper (130, 530), einem keramischem Abutment (120, 120', 520), einen Verbinder (1, 1', 1", 5) zum Verbinden von Basiskörper (130, 530), und Abutment (120, 120', 520) miteinander, und wenigstens einem Buchsenkörper (6), der dazu ausgestaltet ist, zumindest in einem Endmontagezustand (E) des Dentalimplantates (100, 100', 500) wenigstens teilweise im Basiskörper (130, 530) und/oder im Abutment (120, 120', 520) aufgenommen zu sein und wenigstens abschnittsweise den Verbinder (1, 1', 1", 5) zu umgreifen, **dadurch gekennzeichnet, dass** der Buchsenkörper (6) mit wenigstens einem Rastelement (6901) versehen ist, das dazu ausgestaltet ist, in ein am Verbinder (1, 1', 1", 5) ausgeformtes Gegenrastelement (54) einzugreifen, um Buchsenkörper (6) und Verbinder (1, 1', 1", 5) zumindest temporär unverlierbar miteinander zu verbinden.

## Claims

1. Dental implant (100, 100', 500), which comprises
a ceramic base body (130, 530),
a ceramic abutment (120, 120', 520),
a connector (1, 1', 1", 5) for connecting the base body (130, 530) and the abutment (120, 120', 520) to one another, and
a bushing body (6),
wherein, at least in a final assembly state (E) of the dental implant (100, 100', 500), the bushing body is received at least partly in the base body (130, 530) and/or in the abutment (120, 120', 520) and wherein the bushing body reaches at least in some portions around the connector (1, 1', 1", 5),
**characterized in that the** bushing body (6) is provided with at least one latching element (6901), which is configured to engage in a counter latching element (54) configured on the connector (1, 1', 1", 5) in order at least temporarily to connect the bushing body (6) and the connector (1, 1', 1", 5) captively to one another.

2. Dental implant (100, 100', 500) according to Claim 1, **characterized in that** the bushing body (6) and/or the connector (1, 1', 1", 5) are or is produced at least in some portions from a metal, a metal alloy, a plastic material, and/or a carbon fibre material.

3. Dental implant (100, 100', 500) according to Claim 1 or 2, **characterized in that,** at least in the final assembly state (E) the bushing body (6) engages at least partly in the base body (130, 530) and the abutment (120, 120', 520).

4. Dental implant (100, 100', 500) according to at least one of the aforementioned claims, **characterized in that,** at least in the final assembly state (E), the bushing body (6) protrudes beyond a contact surface (134, 534) which is configured on the base body (130, 530) and is configured to lie against a contact surface (125, 525) of the abutment (120, 120', 520) in the final assembly state (E).

5. Dental implant (100, 100', 500) according to at least one of the aforementioned claims, **characterized in that,** at least in the final assembly state (E), the abutment (120, 120', 520) lies on the bushing body (6) and/or the base body (130, 530).

6. Dental implant (100, 100', 500) according to at least one of the aforementioned claims, **characterized in that** the bushing body (6) has a substantially cylindrical inner circumferential surface (63).

7. Dental implant (100, 100', 500) according to at least one of the aforementioned claims, **characterized in that** an inner diameter of the bushing body (6) corresponds substantially to an outer diameter of at least one shaft portion (53) of the connector (1, 1', 1", 5).

8. Dental implant (100, 100', 500) according to at least one of the aforementioned claims, **characterized in that** at least one positive-fit element (65) is configured on an outer circumferential surface (64) of the bushing body (6).

9. Dental implant (100, 100', 500) according to Claim 8, **characterized in that** the at least one positive-fit element (65) is provided with an inserting bevel (68), which at least in some portions faces in a direction of insertion (I), in which the bushing body (6) is configured such that it can be inserted into the base body (130, 530) and/or the abutment (120, 120', 520).

10. Dental implant (100, 100', 500) according to at least one of the aforementioned claims, **characterized in that** at least one positive element (126, 526) of the abutment (120, 120', 520) is configured to interact in a positive-fitting manner with the base body (130, 530) and/or the bushing body (6).

11. Dental implant (100, 100', 500) according to at least one of the aforementioned claims, **characterized in that** at least one negative element (136, 536) of the base body (130, 530) is configured to interact in a positive-fitting manner with the abutment (120, 120', 520) and/or the bushing body (6).

12. Dental implant (100, 100', 500) according to at least one of the aforementioned claims, **characterized by** a ceramic tooth structure (110).

13. Dental implant (100, 100', 500) according to at least one of the aforementioned claims, **characterized in that** the at least one latching element (6901) is configured on at least one lug (69) that protrudes from an upper edge (67) of an envelope section (61) of the bushing body (6).

14. Dental implant (100, 100', 500) according to at least one of the aforementioned claims, **characterized in that** a minimum inner width of the bushing body (6) is less than an outer diameter of a base thread (111, 111', 111", 511) of the connector (1, 1', 1", 5) for screwing the connector (1, 1', 1", 5) into the base body (130, 530).

15. Kit for a dental implant (100, 100', 500) according to at least one of the aforementioned claims, with a ceramic base body (130, 530), a ceramic abutment (120, 120', 520), a connector (1, 1', 1", 5) for connecting the base body (130, 530) and the abutment (120, 120', 520) to one another, and at least one bushing body (6), which at least in a final assembly state (E) of the dental implant (100, 100', 500) is configured to be received at least partly in the base body (130, 530) and/or in the abutment (120, 120', 520) and to reach at least in some portions around the connector (1, 1' 1", 5), **characterized in that** the bushing body (6) is provided with at least one latching element (6901), which is configured to engage in a counter latching element (54) configured on the connector (1, 1', 1", 5) in order at least temporarily to connect the bushing body (6) and the connector (1, 1', 1", 5) captively to one another.

## Revendications

1. Implant dentaire (100, 100', 500) qui comporte
un corps de base (130, 530) en céramique,
un pilier prothétique (120, 120', 520) en céramique,
un connecteur (1, 1', 1", 5) servant à connecter le corps de base (130, 530) et le pilier prothétique (120, 120', 520) l'un à l'autre, et
un corps de manchon (6),
dans lequel le corps de manchon est, au moins dans un état de montage final (E) de l'implant dentaire (100, 100', 500), logé au moins partiellement dans le corps de base (130, 530) et/ou dans le pilier prothétique (120, 120', 520) et dans lequel le corps de manchon vient en prise autour du connecteur (1, 1', 1", 5) au moins dans certaines parties,
**caractérisé en ce que** le corps de manchon (6) est doté d'au moins un élément d'encliquetage (6901) qui est configuré pour venir en prise dans un élément d'encliquetage conjugué (54) formé sur le connecteur (1, 1', 1", 5), afin de connecter l'un à l'autre le corps de manchon (6) et le connecteur (1, 1', 1", 5) de manière imperdable au moins temporairement.

2. Implant dentaire (100, 100', 500) selon la revendication 1, **caractérisé en ce que** le corps de manchon (6) et/ou le connecteur (1, 1', 1", 5) est ou sont fabriqué(s) au moins dans certaines parties à partir d'un métal, d'un alliage métallique, d'une matière plastique et/ou d'une matière en fibres de carbone.

3. Implant dentaire (100, 100', 500) selon la revendication 1 ou 2, **caractérisé en ce que** le corps de manchon (6) vient en prise au moins partiellement dans le corps de base (130, 530) et le pilier prothétique (120, 120', 520) au moins dans l'état de montage final (E).

4. Implant dentaire (100, 100', 500) selon au moins l'une des revendications susmentionnées, **caractérisé en ce que** le corps de manchon (6) fait saillie, au moins dans l'état de montage final (E), au-delà d'une surface de contact (134, 534) formée sur le corps de base (130, 530), laquelle surface est configurée pour s'appuyer contre une surface de contact (125, 525) du pilier prothétique (120, 120', 520) dans l'état de montage final (E).

5. Implant dentaire (100, 100', 500) selon au moins l'une des revendications susmentionnées, **caractérisé en ce que** le pilier prothétique (120, 120', 520) repose sur le corps de manchon (6) et/ou le corps de base (130, 530) au moins dans l'état de montage final (E).

6. Implant dentaire (100, 100', 500) selon au moins l'une des revendications susmentionnées, **caractérisé en ce que** le corps de manchon (6) comprend une surface périphérique intérieure (63) sensiblement cylindrique.

7. Implant dentaire (100, 100', 500) selon au moins l'une des revendications susmentionnées, **caractérisé en ce qu'**un diamètre intérieur du corps de manchon (6) correspond sensiblement à un diamètre extérieur d'au moins une partie tige (53) du connecteur (1, 1', 1", 5).

8. Implant dentaire (100, 100', 500) selon au moins l'une des revendications susmentionnées, **caractérisé en ce qu'**au moins un élément de complémentarité de forme (65) est formé sur une surface périphérique extérieure (64) du corps de manchon (6).

9. Implant dentaire (100, 100', 500) selon la revendication 8, **caractérisé en ce que** ledit au moins un élément de complémentarité de forme (65) est doté d'un biseau d'insertion (68) qui est orienté au moins dans certaines parties dans une direction d'insertion (I) dans laquelle le corps de manchon (6) est configuré de manière insérable dans le corps de base (130, 530) et/ou le pilier prothétique (120, 120', 520).

10. Implant dentaire (100, 100', 500) selon au moins l'une des revendications susmentionnées, **caractérisé en ce qu'**au moins un élément positif (126, 526) du pilier prothétique (120, 120', 520) est configuré pour coopérer par complémentarité de forme avec le corps de base (130, 530) et/ou le corps de manchon (6).

11. Implant dentaire (100, 100', 500) selon au moins l'une des revendications susmentionnées, **caractérisé en ce qu'**au moins un élément négatif (136, 536) du corps de base (130, 530) est configuré pour coopérer par complémentarité de forme avec le pilier prothétique (120, 120', 520) et/ou le corps de manchon (6).

12. Implant dentaire (100, 100', 500) selon au moins l'une des revendications susmentionnées, **caractérisé par** une structure de dent (110) en céramique.

13. Implant dentaire (100, 100', 500) selon au moins l'une des revendications susmentionnées, **caractérisé en ce que** ledit au moins un élément d'encliquetage (6901) est formé sur au moins une languette (69) qui fait saillie à partir d'un bord supérieur (67) d'une partie d'enveloppe (61) du corps de manchon (6).

14. Implant dentaire (100, 100', 500) selon au moins l'une des revendications susmentionnées, **caractérisé en ce qu'**une largeur intérieure minimale du corps de manchon (6) est inférieure à un diamètre extérieur d'un filetage de base (111, 111', 111", 511) du connecteur (1, 1', 1", 5) pour le vissage du connecteur (1, 1', 1", 5) dans le corps de base (130, 530).

15. Kit pour un implant dentaire (100, 100', 500) selon au moins l'une des revendications susmentionnées, comportant un corps de base (130, 530) en céramique, un pilier prothétique (120, 120', 520) en céramique, un connecteur (1, 1', 1", 5) servant à connecter le corps de base (130, 530) et le pilier prothétique (120, 120', 520) l'un à l'autre, et au moins un corps de manchon (6) qui est configuré pour être, au moins dans un état de montage final (E) de l'implant dentaire (100, 100', 500), logé au moins partiellement dans le corps de base (130, 530) et/ou dans le pilier prothétique (120, 120', 520) et pour venir en prise autour du connecteur (1, 1', 1", 5) au moins dans certaines parties, **caractérisé en ce que** le corps de manchon (6) est doté d'au moins un élément d'encliquetage (6901) qui est configuré pour venir en prise dans un élément d'encliquetage conjugué (54) formé sur le connecteur (1, 1', 1", 5), afin de connecter l'un à l'autre le corps de manchon (6) et le connecteur (1, 1', 1", 5) de manière imperdable au moins temporairement.
